(19) Europäisches Patentamt / European Patent Office / Office européen des brevets

(11) **EP 4 037 036 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **21154259.2**

(22) Anmeldetag: **29.01.2021**

(51) Internationale Patentklassifikation (IPC):
***H01M 4/62*** *(2006.01)* ***H01M 4/131*** *(2010.01)*
***H01M 4/133*** *(2010.01)* ***H01M 4/136*** *(2010.01)*
***H01M 4/485*** *(2010.01)* ***H01M 4/505*** *(2010.01)*
***H01M 4/525*** *(2010.01)* ***H01M 4/58*** *(2010.01)*
***H01M 4/587*** *(2010.01)* ***H01M 10/0525*** *(2010.01)*
***H01M 10/054*** *(2010.01)* ***H01M 10/0563*** *(2010.01)*
***H01M 10/0567*** *(2010.01)* ***H01M 10/0568*** *(2010.01)*

(52) Gemeinsame Patentklassifikation (CPC):
**H01M 4/622; H01M 4/131; H01M 4/133; H01M 4/136; H01M 4/485; H01M 4/505; H01M 4/525; H01M 4/582; H01M 4/5825; H01M 4/587; H01M 10/0525; H01M 10/054; H01M 10/0563; H01M 10/0567; H01M 10/0568;**
(Forts.)

(54) **WIEDERAUFLADBARE BATTERIEZELLE**

RECHARGEABLE BATTERY CELL

ÉLÉMENT DE BATTERIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.08.2022 Patentblatt 2022/31**

(73) Patentinhaber: **Innolith Technology AG**
**4052 Basel (CH)**

(72) Erfinder:
- **ZINCK, Laurent**
**67470 Mothern (FR)**
- **BORCK, Markus**
**70567 Stuttgart (DE)**
- **THÜMMEL, Julia**
**76646 Bruchsal (DE)**

(74) Vertreter: **LBP Lemcke, Brommer & Partner Patentanwälte mbB**
**Siegfried-Kühn-Straße 4**
**76135 Karlsruhe (DE)**

(56) Entgegenhaltungen:
**EP-A1- 3 734 724**
**WO-A1-2020/013667**
**WO-A1-2021/006704**
**US-A1- 2015 093 632**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 037 036 B1

(52) Gemeinsame Patentklassifikation (CPC): (Forts.)
H01M 2300/002; Y02E 60/10

## Beschreibung

Die Erfindung betrifft eine wiederaufladbare Batteriezelle mit einem auf $SO_2$-basierenden Elektrolyt.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche Lithium als aktives Metall enthalten, werden auch als Lithium-Ionen-Zellen bezeichnet. Die Energiedichte dieser Lithium-Ionen-Zellen kann entweder durch Steigerung der spezifischen Kapazität der Elektroden oder durch Steigerung der Zellspannung erhöht werden.

Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur aufweisen, in die Ionen des aktiven Materials beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können. Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab.

Auch der Elektrolyt ist ein wichtiges Funktionselement jeder wiederaufladbaren Batteriezelle. Er enthält meistens ein Lösungsmittel oder ein Lösungsmittelgemisch und mindestens ein Leitsalz. Feststoffelektrolyte oder ionische Flüssigkeiten enthalten zum Beispiel kein Lösungsmittel, sondern nur das Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Ionen-Zellen enthalten einen Elektrolyten, der aus einem in einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$). Das Lösungsmittelgemisch kann beispielsweise Ethylencarbonat enthalten. Der Elektrolyt LP57, der die Zusammensetzung 1 M $LiPF_6$ in EC:EMC 3:7 aufweist, ist ein Beispiel für einen solchen Elektrolyten. Aufgrund des organischen Lösungsmittels oder Lösungsmittelgemischs werden derartige Lithium-lonen-Zellen auch als organische Lithium-Ionen-Zellen bezeichnet.

Neben den im Stand der Technik häufig verwendeten Lithiumhexafluorophosphat ($LiPF_6$) als Leitsalz, werden auch andere Leitsalze für organische Lithium-Ionen-Zellen beschrieben. So beschreibt zum Beispiel das Dokument JP 4 306858 B2 (im Nachfolgenden bezeichnet als [V1]) Leitsalze in Form von Tetraalkoxy- oder Tetraaryloxyboratsalzen, die fluoriert oder teilfluoriert sein können. Die JP 2001 143750 A (im Nachfolgenden bezeichnet als [V2]) berichtet von fluorierten oder teilfluorierten Tetraalkoxyboratsalzen und Tetraalkoxyaluminatsalzen als Leitsalze. In beiden Dokumenten [V1] und [V2] werden die beschriebenen Leitsalze in organischen Lösungsmitteln oder Lösungsmittelgemischen gelöst und in organische Lithium-Ionen-Zellen eingesetzt.

Es ist seit langem bekannt, dass das ungewollte Überladen von organischen Lithium-Ionen-Zellen zu einer irreversiblen Zersetzung von Elektrolytkomponenten führt. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Ionen-Zelle verantwortlich. Die überwiegende Mehrheit an Ladeprotokollen für diese organischen Lithium-Ionen-Zellen zieht die Zellspannung als Indikator für das Ladeende heran. Hierbei sind Unfälle durch den Thermal

Runaway besonders wahrscheinlich bei der Verwendung von Multizellen-Batteriepacks, in denen mehrere organische Lithium-Ionen-Zellen mit nicht übereinstimmenden Kapazitäten in Reihe geschaltet werden.

Deshalb sind organische Lithium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die bei ungewollter Temperaturerhöhung schmelzen und hierbei die organische Lithium-Ionen-Zelle mit geschmolzenem Kunststoff fluten können. Dadurch wird eine weitere unkontrollierte Temperaturerhöhung vermieden. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle.

Eine aus dem Stand der Technik bekannte Weiterentwicklung sieht die Verwendung eines Elektrolyten auf Schwefeldioxid ($SO_2$)-Basis anstatt eines organischen Elektrolyten für wiederaufladbare Batteriezellen vor. Wiederaufladbare Batteriezellen, welche einen auf $SO_2$-basierenden Elektrolyten enthalten, weisen unter anderem eine hohe ionische Leitfähigkeit auf. Unter dem Begriff "auf $SO_2$-basierender Elektrolyt" ist im Sinne der vorliegenvorliegenden Erfindung ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Das Leitsalz kann mit dem gasförmigen $SO_2$ einen flüssigen Solvatkomplex bilden, wobei das $SO_2$ gebunden und der Dampfdruck gegenüber dem reinen $SO_2$ merklich gesenkt wird. Es entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Beispiele für auf $SO_2$-basierenden Elektrolyte offenbaren die WO 2020/013667 A1 und die WO 2021/006704 A1.

Die WO 2020/013667 A1 beschreibt eine wiederaufladbare Lithiumbatterie mit einer positiven Elektrode, einer negativen Elektrode, einem dazwischenliegenden Separator und einem auf $SO_2$-basierenden Elektrolyt in Kombination mit einer negativen Elektrode, bei der das Kohlenstoffmaterial mit Titanoxid beschichtet ist. In den Experimenten wird ein $LiAl\text{-}Cl_4$* 3 $SO_2$-Elektrolyt verwendet,

Die WO 2021/006704 A1 offenbart einen auf $SO_2$-basierenden Elektrolyten der zwei verschiedene Leitsalze der allgemeinen Formel $MNX\text{-}n(SO_2)$ aufweist (mit M=Alkalimetall; N= mindestens ein Metall ausgewählt aus der der Alkalimetalle, Übergangs-, oder Post-Übergangsmetallen; X=Halogen). Es wird ein auf $SO_2$-basierender Elektrolyt mit der Zusammensetzung $LiAlCl_4{*}3SO_2$ und $NaAlCl_4{*}2SO_2$ beschrieben.

Sowohl für Lithium-Ionen-Zellen mit organischer Elektrolytlösung wie auch für wiederaufladbare Batteriezellen mit einem auf $SO_2$-basierenden Elektrolyten ist die Wahl eines Bindemittels für die positiven und negativen Elektroden von Bedeutung. Bindemittel sollen die mechanische und chemische Stabilität der Elektroden verbessern. Die Bildung von Deckschichten auf der negativen Elektrode und damit die Deckschichtkapazität im ersten Zyklus soll möglichst gering sein und die Lebensdauer der Batteriezelle soll erhöht werden. Dieses Bindemittel muss gegenüber dem verwendeten Elektrolyten stabil sein, über einen langen Zeitraum seine Stabilität beibehalten, auch wenn im Laufe der Lade- und Entladezyklen bei möglichen Fehlfunktionen das aktive Metall, im Falle einer Lithium-Zelle also Lithium, metallisch abgeschieden wird und mit dem Bindemittel in Berührung kommt. Reagiert das Bindemittel mit dem Metall, so ist eine Destabilisierung der mechanischen Struktur der Elektrode die Folge. Bindemittel in der Elektrode beeinflussen die Benetzbarkeit der Elektrodenoberfläche. Ist die Benetzbarkeit beeinträchtigt, dann sind hohe Widerstände innerhalb der wiederaufladbaren Batteriezelle die Folge. Probleme beim Betrieb der wiederaufladbaren Batteriezelle sind die Folge. Ein wichtiger Aspekt bei der Wahl des Bindemittels ist die Form des Ableitelements. Ableitelemente können planar, z.B. in Form eines dünnen Metallblechs oder einer dünnen Metallfolie, oder dreidimensional in Form einer porösen Metallstruktur, z. B. in Form eines Metallschaums ausgebildet sein. Eine dreidimensionale poröse Metallstruktur ist derartig porös, dass das aktive Material der Elektrode in die Poren der Metallstruktur eingearbeitet werden kann. Bei dem planaren Ableitelement wird das aktive Material auf der Oberfläche der Vorder- und/oder der Rückseite des planaren Ableitelements aufgebracht. Je nach Form des Ableitelements gibt es andere Anforderungen an das Bindemittel z.B. muss die Adhäsion am Ableitelement ausreichend sein. Bei der Wahl des Bindemittels und seinem Massenanteil innerhalb der Elektrode muss häufig ein Kompromiss zwischen zum einen der mechanischen Stabilisierung und zum anderen der Verbesserung der elektrochemischen Eigenschaften der Elektrode gefunden werden.

Beispielsweise berichten die Autoren des Artikels (im Nachfolgenden bezeichnet als [V3]):

"Effects of Styrene-Butadiene Rubber/Carboxymethylcellulose (SBR/CMC) and Polyvinylidene Difluoride (PVDF) Binders on Low Temperature Lithium Ion Batteries"

Jui-Pin Yen, Chia-Chin Chang, Yu-Run Lin, Sen-Thann Shen and Jin-Long Honga Journal of The Electrochemical Society, 160 (10) A1811-A1818 (2013)

von Untersuchungen von Graphit-basierten Anoden mit den Bindemitteln SBR/CMC oder PVDF in einer organischen Elektrolytlösung mit $LiPF_6$ als Leitsalz (1M) in Ethylen carbonate (EC)/Diethyl carbonate (DEC) (v/v=1:1). Sie kommen zu dem Ergebnis, dass die Elektroden mit dem PVDF- Bindemittel einen geringeren Widerstand, eine bessere Entladerate und eine bessere Zykelstabilität besitzen im Vergleich zu den Elektroden mit SBR/CMC-Bindemittelgemisch.

Aus der US 2015/0093632 A1 (im Nachfolgenden bezeichnet als [V4]) geht ein auf $SO_2$-basierender Elektrolyt mit der Zusammensetzung $LiAlCl_4$ * $SO_2$ hervor. Der Elektrolyt enthält als Leitsalz vorzugsweise ein Lithiumtetrahalogenoaluminat, besonders bevorzugt ein Lithiumtetrachloroaluminat ($LiAlCl_4$). Die positiven und negativen Elektroden sind ungewöhnlich dick und weisen ein Ableitelement mit einer dreidimensionalen porösen Metallstruktur auf. Um die Startkapazität zu erhöhen und die mechanische und chemische Stabilität der negativen und positiven Elektrode zu verbessern, wird vorgeschlagen, ein Bindemittel A, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, wie z. B. Lithiumpolyacrylat (LiPAA), oder ein Bindemittel B, welches aus einem Polymer besteht, das auf monomeren Styrol- und Butadien-Struktureinheiten basiert oder einer Mischung aus Bindemittel A und B, zu verwenden.

Auch die WO 2020/221564 (im Nachfolgenden bezeichnet als [V5]) offenbart einen auf $SO_2$-basierenden Elektrolyten mit unter anderem $LiAlCl_4$ als Leitsalz in Kombination mit einem schwefeldotierten aktiven Material der positiven Elektrode. Als Bindemittel für die negative Elektrode und für die positive Elektrode, die bevorzugt ein Ableitelement mit einer dreidimensionalen porösen Metallstruktur aufweisen, werden fluorierte Bindemittel, z.B. Vinylidenfluorid (THV) oder Polyvinylidenfluorid (PVDF), oder Salze der Polyacrylsäure, z.B. Lithiumpolyacrylat (LiPAA) oder Bindemittel aus einem Polymer, das auf monomeren Styrol- und Butadien-Struktureinheiten basiert, oder Bindemittel aus der Gruppe der Carboxymethylcellulosen vorgeschlagen. Für die negative Elektrode haben sich insbesondere Polymere aus einem Alkalisalz einer konjugierten Carbonsäure bewährt. Für die positive Elektrode haben sich insbesondere THV und PVDF bewährt.

Ein Nachteil, der unter anderem auch bei diesen auf $SO_2$-basierenden Elektrolyten auftritt, besteht darin, dass etwaige in Anwesenheit von Restmengen an Wasser entstehende Hydrolyseprodukte mit den Zellkomponenten der wiederaufladbaren Batteriezelle reagieren und dadurch zur Bildung von unerwünschten Nebenprodukten führen. Aufgrund dessen muss bei der Herstellung derartiger wiederaufladbare Batteriezellen mit einem auf $SO_2$-basierenden Elektrolyten auf eine Minimierung des im Elektrolyten und den Zellkomponenten enthaltenen Restwassergehalts geachtet werden.

Ein weiteres Problem bei den auf $SO_2$-basierenden Elektrolyten besteht darin, dass viele, insbesondere auch für organische Lithium-Ionen-Zellen bekannte Leitsalze nicht in $SO_2$ löslich sind.

Tabelle 1: Löslichkeiten verschiedener Leitsalze in $SO_2$

| Leitsalz | Löslichkeit / mol/L in $SO_2$ | Leitsalz | Löslichkeit / mol/L in $SO_2$ |
|---|---|---|---|
| LiF | $2{,}1\cdot10^{-3}$ | $LiPF_6$ | $1{,}5\cdot10^{-2}$ |
| LiBr | $4.9\cdot10^{-3}$ | $LiSbF_6$ | $2.8\cdot10^{-4}$ |
| $Li_2SO_4$ | $2.7\cdot10^{-4}$ | $LiBF_2(C_2O_4)$ | $1{,}4\cdot10^{-4}$ |
| $LiB(C_2O_4)_2$ | $3.2\cdot10^{-4}$ | $CF_3SO_2NLiSO_2CF_3$ | $1{,}5\cdot10^{-2}$ |
| $Li_3PO_4$ | - | $LiBO_2$ | $2.6\cdot10^{-4}$ |
| $Li_3AlF_6$ | $2{,}3\cdot10^{-3}$ | $LiAlO_2$ | $4.3\cdot10^{-4}$ |
| $LiBF_4$ | $1.7\cdot10^{-3}$ | $LiCF_3SO_3$ | $6.3\cdot10^{-4}$ |
| $LiAsF_6$ | $1{,}4\cdot10^{-3}$ | | |

Messungen ergaben, dass $SO_2$ ein schlechtes Lösungsmittel für viele Leitsalze ist, wie z.B. Lithiumfluorid (LiF), Lithiumbromid (LiBr), Lithiumsulfat ($Li_2SO_4$), Lithiumbis(o-xalato)borat (LiBOB), Lithiumhexafluoroarsenat ($LiAsF_6$), Lithiumtetrafluorborat ($LiBF_4$), Trilithiumhexafluoroaluminat ($Li_3AlF_6$), Lithiumhexafluoroantimonat ($LiSbF_6$), Lithium Difluoro(oxalato)borat ($LiBF_2C_2O_4$), Lithium-bis(trifluoromethansulfonyl)imid (LiTFSI), Lithiummetaborat ($LiBO_2$), Lithiumaluminat ($LiAlO_2$), Lithiumtriflat ($LiCF_3SO_3$) und Lithiumchlorsulfonat ($LiSO_3Cl$). Die Löslichkeiten dieser Leitsalze liegen in $SO_2$ bei ca. $10^{-2}$ - $10^{-4}$ mol/L (siehe Tabelle 1). Bei diesen geringen Salz-Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

Um die Einsatzmöglichkeiten sowie Eigenschaften von wiederaufladbaren Batteriezellen, die einen auf $SO_2$-basierenden Elektrolyten enthalten, weiter zu verbessern, liegt der vorliegenden Erfindung die Aufgabe zugrunde, eine wiederaufladbare Batteriezelle mit auf $SO_2$-basierenden Elektrolyten anzugeben, die gegenüber den aus dem Stand der Technik bekannten wiederaufladbaren Batteriezellen

- Elektroden mit inerten Bindemitteln aufweist, welche Bindemittel keine Reaktionen mit dem auf $SO_2$-basierenden Elektrolyten zeigen, auch bei höheren Ladepotentialen stabil sind, keine oxidative Elektrolytzersetzung beschleunigen und die Reaktionen zur Deckschichtbildung nicht beeinträchtigen;
- ein Bindemittel aufweist, mit dem sich Elektroden mit einer guten mechanischen Stabilität herstellen lassen;
- ein Bindemittel aufweist, das sich gemeinsam mit einem aktiven Material der Elektroden gleichmäßig auf dem Ableitelement der jeweiligen Elektrode verteilen bzw. auftragen lässt und eine gute elektrische Anbindung des aktiven Materials an das Ableitelement der jeweiligen Elektrode ermöglicht;
- eine gute Benetzbarkeit der Elektroden mit dem Elektrolyten aufweist;
- einen möglichst niedrigen Preis und eine hohe Verfügbarkeit aufweisen, insbesondere bei großen Batterien oder bei Batterien mit einer großen Verbreitung;
- ein breites elektrochemisches Fenster hat, sodass keine oxidative Elektrolytzersetzung an der positiven Elektrode auftritt;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- einen auf $SO_2$-basierenden Elektrolyten enthält, der eine für Leitsalze gute Löslichkeit aufweist und damit ein guter Ionenleiter und elektronischer Isolator ist, damit der Ionentransport erleichtert und die Selbstentladung auf ein Minimum beschränkt werden kann;
- einen auf $SO_2$-basierenden Elektrolyten enthält, der auch gegenüber anderen Komponenten der wiederaufladbaren Batteriezelle, wie Separatoren, Elektrodenmaterialien und Zellverpackungsmaterialien, inert ist;
- gegen verschiedene Missbräuche, wie elektrische, mechanische oder thermische, robust ist;
- verbesserte elektrische Leistungsdaten, insbesondere eine hohe Energiedichte aufweist;
- eine verbesserte Überladefähigkeit und Tiefentladefähigkeit und eine geringere Selbstentladung aufweist und
- eine gesteigerte Lebensdauer, insbesondere eine hohe Zahl nutzbarer Lade- und Entladezyklen zeigt.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen aufweisen, ohne dass sich hierbei der Elektrolyt im Betrieb der wiederaufladbaren Batteriezelle zersetzt.

Gelöst wird diese Aufgabe durch eine wiederaufladbare Batteriezelle mit den Merkmalen des Anspruchs 1. Die Ansprüche 2 bis 21 beschreiben vorteilhafte Weiterbildungen der erfindungsgemäßen wiederaufladbaren Batteriezelle.

Eine erfindungsgemäße wiederaufladbare Batteriezelle umfasst ein aktives Metall, zumindest eine positive Elektrode mit einem planaren Ableitelement, zumindest eine negative Elektrode mit einem planaren Ableitelement, ein Gehäuse und einen auf $SO_2$-basierenden Elektrolyten, welcher ein erstes Leitsalz enthält. Die positive und/oder die negative enthalten mindestens ein erstes Bindemittel und mindestens ein zweites Bindemittel. Das erste Bindemittel besteht aus einem Polymer, das auf monomeren Styrol- und Butadien-Struktureinheiten basiert. Das zweite Bindemittel ist aus der Gruppe der Carboxymethylcellulosen ausgewählt.

Bei der Entwicklung dieser erfindungsgemäßen Batteriezelle stand die Anmelderin eine Reihe schwieriger Probleme entgegen, die mit der Verwendung des auf $SO_2$ basierenden Elektrolyten und mit dem Einsatz von planaren Ableitelementen zusammenhängen. Um das aktive Material zusammen mit dem jeweiligen Bindemittel oder einer Kombination von Bindemitteln möglichst gleichmäßig auf dem planaren Ableitelement zu verteilen, muss sich zusammen mit einem Lösemittel eine homogene Mischung der Komponenten herstellen lassen. Diese homogene Mischung muss sich leicht auf das planare Ableitelement auftragen lassen. Sind diese Bedingungen nicht gegeben so entstehen erhebliche Probleme bei der Herstellung einer mechanisch stabilen Elektrode. Im Fall der erfindungsgemäßen wiederaufladbaren Batteriezelle wurden diese Probleme gelöst, denn es konnte aus dem ersten und dem zweiten Bindemittel zusammen mit dem aktiven Material eine homogene Mischung hergestellt und diese homogene Mischung leicht auf das planare Ableitelement der jeweiligen Elektrode auftragen werden. Als erstes Bindemittel kann insbesondere Styrol-Butadien-Kautschuk verwendet werden (in Engl.: styrene-butadiene rubber; Abk.: SBR). Bei dem zweiten Bindemittel kommt insbesondere Carboxymethylcellulose (Abk.: CMC) zum Einsatz.

Unter dem Begriff "Ableitelement" wird im Sinne der vorliegenden Erfindung ein elektronisch leitendes Element bezeichnet, welches dazu dient, den erforderlichen elektronisch leitenden Anschluss des aktiven Materials der jeweiligen Elektrode an den äußeren Stromkreislauf zu ermöglichen. Hierfür steht das Ableitelement in elektronischem Kontakt, mit dem an der Elektrodenreaktion der Elektrode beteiligten, aktiven Material. Das Ableitelement liegt planar, also in einer annähernd zweidimensionalen Ausführungsform vor.

Der in der erfindungsgemäßen wiederaufladbaren Batteriezelle verwendete, auf $SO_2$-basierende Elektrolyt

enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze enthalten, welche in ihrer chemischen Struktur voneinander abweichen.

Ein wiederaufladbare Batteriezelle mit einem derartigen Elektrolyten hat den Vorteil, dass das darin enthaltene erste Leitsalz eine hohe Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 4,0 Volt, weiter bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale, d.h. im Bereich zwischen der Ladeschlussspannung und der Entladeschlussspannung beider Elektroden der wiederaufladbaren Batteriezelle. Dadurch können erfindungsgemäße wiederaufladbare Batteriezellen eine Ladeschlussspannung von mindestens 4,0 Volt, weiter bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt aufweisen. Die Lebensdauer der wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist eine wiederaufladbaren Batteriezelle mit einem solchem Elektrolyten auch tieftemperaturfest. Bei einer Temperatur von z.B. -40°C können noch 61% der geladenen Kapazität entladen werden. Die Leitfähigkeit des Elektrolyten bei tiefen Temperaturen ist ausreichend zum Betrieb einer Batteriezelle.

Positive Elektrode

Nachfolgend sind vorteilhafte Weiterbildungen der erfindungsgemäßen wiederaufladbaren Batteriezelle im Hinblick auf die positive Elektrode beschrieben:

Eine erste vorteilhafte Weiterbildung der erfindungsgemäßen wiederaufladbaren Batteriezelle sieht vor, dass die positive Elektrode mindestens bis zu einem oberen Potenzial von 4,0 Volt, bevorzugt bis zu einem Potenzial von 4,4 Volt weiter bevorzugt von mindestens einem Potenzial von 4,8 Volt, weiter bevorzugt mindestens bis zu einem Potenzial von 5,2 Volt, weiter bevorzugt mindestens bis zu einem Potenzial von 5,6 Volt und besonders bevorzugt mindestens bis zu einem Potenzial von 6,0 Volt ladbar ist.

Die positive Elektrode enthält in einer weiteren vorteilhaften Weiterbildung der erfindungsgemäßen wiederaufladbaren Batteriezelle mindestens ein aktives Material. Dieses kann Ionen des aktiven Metalls speichern und während des Betriebs der Batteriezelle die Ionen des aktiven Metalls abgeben und wiederaufnehmen. Hierbei ist es wesentlich, dass eine gute elektrische Anbindung des aktiven Materials an das planare Ableitelement durch das Bindemittel der positiven Elektrode nicht beeinträchtigt wird. Durch die Verwendung des ersten und zweiten Bindemittels wird eine gute elektrische Anbindung des aktiven Materials an das planare Ableitelement der positiven Elektrode erreicht, die auch im Betrieb innerhalb einer Batterie beibehalten wird.

Die positive Elektrode enthält in einer weiteren vorteilhaften Weiterbildung der erfindungsgemäßen wiederaufladbaren Batteriezelle zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen.

Die positive Elektrode enthält in einer weiteren vorteilhaften Weiterbildung der erfindungsgemäßen wiederaufladbaren Batteriezelle als aktives Material zumindest eine Umwandlungsverbindung. Unter dem Begriff "Umwandlungsverbindungen" sind im Sinne der vorliegenden Erfindung Materialien zu verstehen, die während der elektrochemischen Aktivität andere Materialien formen; d.h. während des Ladens und Entladens der Batteriezelle werden chemische Bindungen gebrochen und neu geknüpft. Während der Aufnahme oder Abgabe der Ionen des aktiven Metalls kommt es in der Matrix der Umwandlungsverbindung zu strukturellen Änderungen.

Das aktive Material weist in einer weiteren vorteilhaften Weiterbildung der erfindungsgemäßen wiederaufladba-

ren Batteriezelle die Zusammensetzung

$A_xM'_yM''_zO_a$ auf. In dieser Zusammensetzung $A_xM'_yM''_zO_a$ ist/sind

- A mindestens ein Metall, das ausgewählt ist aus der Gruppe, die gebildet wird von den Alkalimetallen, den Erdalkalimetallen, den Metallen der Gruppe 12 des Periodensystems oder Aluminium,
- M' mindestens ein Metall, das ausgewählt ist aus der Gruppe, die gebildet wird von den Elementen Ti, V, Cr, Mn, Fe, Co, Ni, Cu und Zn;
- M" mindestens ein Element, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0;
- z eine Zahl größer oder gleich 0; und
- a eine Zahl größer 0.

A ist vorzugsweise das Metall Lithium, d.h. die Verbindung kann die Zusammensetzung $Li_xM'_yM''_zO_a$ aufweisen.

Die Indizes y und z in der Zusammensetzung $A_xM'_yM''_zO_a$ beziehen sich dabei auf die Gesamtheit der Metalle und Elemente, die durch M' bzw. M" repräsentiert werden. Umfasst zum Beispiel M' zwei Metalle $M'^1$ und $M'^2$, so gilt für den Index y: y=y1+y2, wobei y1und y2 die Indizes der Metalle $M'^1$ und $M'^2$ darstellen. Die Indizes x, y, z und a müssen so gewählt werden, dass eine Ladungsneutralität innerhalb der Zusammensetzung herrscht. Beispiele für Verbindungen bei denen M' zwei Metalle umfasst sind Lithiumnickelmangancobaltoxide der Zusammensetzung $Li_xNi_{y1}Mn_{y2}Co_zO_2$ mit $M'^1$=Ni, $M'^2$=Mn und M"=Co. Beispiele für Verbindungen in denen z=0 ist, die also kein weiteres Metall oder Element M" aufweisen sind Lithiumkobaltoxide $Li_xCo_yO_a$. Umfasst zum Beispiel M" zwei Elemente, zum einen ein Metall $M''^1$ und zum anderen Phosphor als $M''^2$, so gilt für den Index z: z=z1+z2, wobei z1und z2 die Indizes des Metalls $M''^1$ und des Phosphors ($M''^2$) darstellen. Die Indizes x, y, z und a müssen so gewählt werden, dass eine Ladungsneutralität innerhalb der Zusammensetzung herrscht. Beispiele für Verbindungen bei denen A Lithium, M" ein Metall $M''^1$ und Phosphor als $M''^2$ umfasst sind Lithiumeisenmanganphosphate $Li_xFe_yMn_{z1}P_{z2}O_4$ mit A=Li, M'=Fe, $M''^1$=Mn und $M''^2$=P und z2=1. In einer weiteren Zusammensetzung kann M" zwei Nichtmetalle, zum Beispiel Fluor als $M''^1$ und Schwefel als $M''^2$, umfassen. Beispiele für solche Verbindungen sind Lithiumeisenfluorsulfate $Li_xFe_yF_{z1}S_{z2}O_4$ mit A= Li, M'=Fe, $M''_1$=F und $M''_2$=P.

Eine weitere vorteilhafte Weiterbildung der erfindungsgemäßen wiederaufladbaren Batteriezelle sieht vor, dass M' aus den Metallen Nickel und Mangan besteht und M" Cobalt ist. Es kann sich dabei um Zusammensetzungen der Formel $Li_xNi_{y1}Mn_{y2}Co_zO_2$ (NMC) handeln, d.h. um Lithiumnickelmangancobaltoxide, die die Struktur von Schichtoxiden aufweisen. Beispiele für diese aktiven Materialien aus Lithiumnickelmangancobaltoxid sind $LiNi_{1/3}Mn_{1/3}CO_{1/3}O_2$ (NMC111), $LiNi_{0.6}Mn_{0.2}Co_{0.2}O_2$ (NMC622) und $LiNi_{0.8}Mn_{0.1}Co_{0.1}O_2$ (NMC811). Weitere Verbindungen aus Lithiumnickelmangancobaltoxid können die Zusammensetzung $LiNi_{0,5}Mn_{0,3}Co_{0,2}O_2$, $LiNi_{0,5}Mn_{0,25}Co_{0,25}O_2$, $LiNi_{0,52}Mn_{0,32}Co_{0,16}O_2$, $LiNi_{0,55}Mn_{0,30}Co_{0,15}O_2$, $LiNi_{0,58}Mn_{0,14}Co_{0,28}O_2$, $LiNi_{0,64}Mn_{0,18}Co_{0,18}O_2$, $LiNi_{0,65}Mn_{0,27}Co_{0,08}O_2$, $LiNi_{o,7}Mn_{o,2}Co_{o,1}O_2$, $LiNi_{0,7}Mn_{0,15}Co_{0,15}O_2$, $LiNi_{0,72}Mn_{0,10}Co_{0,18}O_2$, $LiNi_{0,76}Mn_{0,14}Co_{0,10}O_2$, $LiNi_{0,86}Mn_{0,04}Co_{0,10}O_2$, $LiNi_{0,90}Mn_{0,05}Co_{0,05}O_2$, $LiNi_{0,95}Mn_{0,025}Co_{0,25}O_2$ oder eine Kombination davon aufweisen. Mit diesen Verbindungen lassen sich positive Elektroden für wiederaufladbare Batteriezellen mit einer Zellspannung von über 4,6 Volt herstellen.

Eine weitere vorteilhafte Weiterbildung der erfindungsgemäßen wiederaufladbaren Batteriezelle sieht vor, dass es sich bei dem aktiven Material um ein Metalloxid handelt, welches reich an Lithium und Mangan ist (in Engl.: Lithium- and Manganese-Rich Oxide Material). Dieses Metalloxid kann die Zusammensetzung $Li_xMn_{yM}''_zO_a$ aufweisen. M' stellt in der oben beschriebenen Formel $Li_xM'_yM''_zO_a$ somit das Metall Mangan (Mn) dar. Der Index x ist hier größer oder gleich 1, der Index y ist größer als der Index z bzw. größer als die Summe der Indizes z1+z2+z3 etc.. Umfasst z.B. M" zwei Metalle $M''^1$ und $M''^2$ mit den Indizes z1 und z2 (z.B. $Li_{1.2}Mn_{0.525}Ni_{0.175}Co_{0.1}O_2$ mit $M''^1$=Ni z1=0,175 und $M''^2$=Co z2=0, 1) so gilt für den Index y: y>z1+z2, Der Index z ist größer oder gleich 0 ist und der Index a ist größer 0. Die Indizes x, y, z und a müssen so gewählt werden, dass eine Ladungsneutralität innerhalb der Zusammensetzung herrscht. Metalloxide, welche reich an Lithium und Mangan sind, können auch durch die Formel $mLi_2MnO_3 \cdot (1-m)LiM'O_2$ mit $0 < m < 1$ beschrieben werden. Beispiele für derartige Verbindungen sind $Li_{1.2}Mn_{0.525}Ni_{0.175}Co_{0.1}O_2$, $Li_{1.2}Mn_{0.6}Ni_{0.2}O_2$ oder $Li_{1.2}Ni_{0.13}CO_{0.13}Mn_{0.54}O_2$.

Eine weitere vorteilhafte Weiterbildung der erfindungsgemäßen wiederaufladbaren Batteriezelle sieht vor, dass die Zusammensetzung die Formel $A_xM'_yM''_zO_4$ aufweist. Bei diesen Verbindungen handelt es sich um Spinell-Strukturen. Zum Beispiel können A Lithium, M' Kobalt und M" Mangan sein. In diesem Fall handelt es sich bei dem aktiven Material um Lithiumcobaltmanganoxid ($LiCoMnO_4$). Mit $LiCoMnO_4$ lassen sich positive Elektroden für wiederaufladbare Batteriezellen mit einer Zellspannung von über 4,6 Volt herstellen. Dieses $LiCoMnO_4$ ist vorzugsweise $Mn^{3+}$ frei. In einem weiteren Beispiel können M' Nickel und M" Mangan sein. In diesem Fall handelt es sich bei dem aktiven Material um Lithiumnickelmanganoxid ($LiNiMnO_4$). Die molaren Anteile der beiden Metalle M' und M" können variieren. Lithiumnickelmanganoxid kann zum Beispiel die Zusammensetzung $LiNi_{0,5}Mn_{1,5}O_4$ aufweisen.

Die positive Elektrode enthält als aktives Material in einer weiteren vorteilhaften Weiterbildung der erfindungsgemäßen wiederaufladbaren Batteriezelle zumindest ein aktives Material, welches eine Umwandlungsverbindung darstellt. Umwandlungsverbindungen durchlaufen während der Aufnahme des aktiven Metalls, z.B. Lithium oder Natrium,

eine Festkörper-Redoxreaktion bei der sich die Kristallstruktur des Materials ändert. Dieses geschieht unter dem Aufbrechen und Rekombinieren von chemischen Bindungen. Vollständig reversible Reaktionen von Umwandlungsverbindungen können z.B. folgendermaßen lauten:

| | | |
|---|---|---|
| Typ A: | $MX_z + y\,Li$ | $\leftrightarrow M + z\,Li_{(y/z)}X$ |
| Typ B: | $X + y\,Li$ | $\leftrightarrow Li_yX$ |

Beispiele für Umwandlungsverbindungen sind $FeF_2$, $FeF_3$, $CoF_2$, $CuF_2$, $NiF_2$, $BiF_3$, $FeCl_3$, $FeCl_2$, $CoCl_2$, $NiCl_2$, $CuCl_2$, AgCl, LiCl, S, $Li_2S$, Se, $Li_2Se$, Te, I und LiI.

In einer weiteren vorteilhaften Weiterbildung weist die Verbindung die Zusammensetzung $A_xM'_yM''_{z1}M''_{z2}O_4$ auf, wobei M" Phosphor ist und z2 den Wert 1 hat. Bei der Verbindung mit der Zusammensetzung $Li_xM'_yM''_{z1}M''_{z2}O_4$ handelt es sich um sogenannte Lithiummetallphosphate. Insbesondere weist diese Verbindung die Zusammensetzung $Li_xFe_yMn_{z1}P_{z2}O_4$ auf. Beispiele für Lithiummetallphosphate sind Lithiumeisenphosphat ($LiFePO_4$) oder Lithiumeisenmanganphosphate ($Li(Fe_yMn_z)PO_4$). Ein Beispiel für ein Lithiumeisenmanganphosphat ist das Phosphat der Zusammensetzung $Li(Fe_{0.3}Mn_{0.7})PO_4$. Ein Beispiel für ein Lithiumeisenmanganphosphat ist das Phosphat der Zusammensetzung $Li(Fe_{0.3}Mn_{0.7})PO_4$. Auch Lithiummetallphosphate anderer Zusammensetzungen können für die erfindungsgemäße Batteriezelle verwendet werden.

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe, die gebildet wird von einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente, insbesondere Kobalt, Nickel, Mangan oder Eisen.

Eine weitere vorteilhafte Weiterbildung der erfindungsgemäßen wiederaufladbaren Batteriezelle sieht vor, dass die positive Elektrode zumindest eine Metallverbindung enthält, die die chemische Struktur eines Spinells, eines Schichtoxids, einer Umwandlungsverbindung oder einer Polyanionischen Verbindung hat.

Es liegt im Rahmen der Erfindung, dass die positive Elektrode als aktives Material mindestens eine der beschriebenen Verbindungen oder eine Kombination der Verbindungen enthält. Unter einer Kombination der Verbindungen versteht man eine positive Elektrode, die mindestens zwei der beschriebenen Materialien enthält.

Die erfindungsgemäße Batteriezelle weist eine positive Elektrode mit einem planaren Ableitelement auf. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material. Dieses planare Ableitelement ist vorzugsweise ein dünnes Metallblech oder eine dünne Metallfolie. Die dünne Metallfolie kann eine durchbrochene bzw. netzartige Struktur aufweisen. Das planare Ableitelement kann auch aus einer mit Metall beschichtetet Kunststofffolie bestehen. Diese Metallbeschichtungen weisen eine Dicke im Bereich von 0,1 $\mu$m bis 20$\mu$m auf. Das aktive Material der positiven Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 $\mu$m bis 50 $\mu$m auf. Eine Dicke des planaren Ableitelements im Bereich von 10 $\mu$m bis 30 $\mu$m ist bevorzugt. Bei der Verwendung von planaren Ableitelementen kann die positive Elektrode eine Gesamtdicke von mindestens 20 $\mu$m, bevorzugt mindestens 40 $\mu$m und besonders bevorzugt mindestens 60 $\mu$m aufweise. Die maximalen Dicke beträgt höchstens 200 $\mu$m, bevorzugt höchstens 150 $\mu$m und besonders bevorzugt höchstens 100 $\mu$m. Die flächenspezifische Kapazität der positiven Elektrode bezogen auf die Beschichtung einer Seite weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20 $mAh/cm^2$. Wenn das Ableitelement planar in Form eines dünnen Metallblechs, einer dünnen Metallfolie oder einer mit Metall beschichteten Kunststofffolie ausgebildet ist, beträgt die Menge des aktiven Materials der positiven Elektrode, d.h. die Beladung der Elektrode, bezogen auf die Beschichtung einer Seite vorzugsweise mindestens 1 $mg/cm^2$, bevorzugt mindestens 3 $mg/cm^2$, weiter bevorzugt mindestens 5 $mg/cm^2$, weiter bevorzugt mindestens 8 $mg/cm^2$, weiter bevorzugt mindestens 10 $mg/cm^2$, und besonders bevorzugt mindestens 20 $mg/cm^2$ auf.

Die maximale Beladung der Elektrode, bezogen auf die Beschichtung einer Seite beträgt bevorzugt höchstens 150 $mg/cm^2$, weiter bevorzugt höchstens 100 $mg/cm^2$ und besonders bevorzugt höchstens 80 $mg/cm^2$.

Die positive Elektrode weist in einer weiteren vorteilhaften Weiterbildung der erfindungsgemäßen Batteriezelle zumindest ein weiteres, von dem ersten und dem zweiten Bindemittel abweichendes Bindemittel auf. Dieses weitere Bindemittel ist vorzugsweise

- ein fluoriertes Bindemittel, insbesondere ein Polyvinylidenfluorid (Abk.: PVDF) und/oder ein Terpolymer aus Tetrafluorethylen, Hexafluorpropylen und Vinylidenfluorid, oder

- ein Polymer ist, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist.

Bei dem weiteren Bindemittel in Form des Polymers kann es sich um Lithiumpolyacrylat (LiPAA) handeln. Die positive Elektrode kann auch zwei weitere, von dem ersten und dem zweiten Bindemittel abweichende Bindemittel enthalten. In diesem Fall enthält die positive Elektrode vorzugsweise ein drittes Bindemittel in Form des fluorierten Bindemittels, insbesondere des Polyvinylidenfluorids (Abk.: PVDF) und/oder des Terpolymers aus Tetrafluorethylen, Hexafluorpropylen und Vinylidenfluorid, und ein viertes Bindemittel in Form des Polymers, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Bei der Verwendung des fluorierten Bindemittels besteht das Problem, dass sich diese oft nur in leichtentzündlichen, umweltbelastenden, organischen Lösungsmitteln lösen. Bei der Herstellung von positiven Elektroden mit einem fluorierten Bindemittel müssen aufwändige Apparaturen verwendet werden, die dem Einsatz dieser Lösungsmittel Rechnung tragen. Problematisch sind hierbei insbesondere Explosionsschutz, Umweltschutz und Schutz der exponierten Mitarbeiter. Diese Probleme mussten von der Anmelderin bei der Entwicklung dieser vorteilhaften Weiterbildung der erfindungsgemäßen Batteriezelle berücksichtigt werden.

Bei der Entwicklung der wiederaufladbaren Batteriezelle der vorliegenden Patentanmeldung stellte die Anmelderin fest, dass die optimale Konzentration an dem ersten, zweiten, dritten und/oder vierten Bindemittel bezogen auf das Gesamtgewicht der positiven Elektrode schwierig zu ermitteln ist: Eine zu niedriger Konzentration in der positiven Elektrode führte zu einer schlechten Handhabung der hergestellten positiven Elektrode, da z.B. bindemittelfreie Elektroden keine Adhäsion zum Ableitelement aufweisen, es zur Partikelfreisetzung des aktiven Materials und in Folge zur Unbrauchbarkeit der hergestellten wiederaufladbaren Batteriezelle kommen kann. Eine zu hohe Konzentration an Bindemittel wirkt sich wiederum negativ auf die Energiedichte der wiederaufladbaren Batteriezelle aus. Durch das Gewicht des Bindemittels wird nämlich die Energiedichte erniedrigt. Des Weiteren kann eine zu hohe Bindemittelkonzentration dazu führen, dass die positive Elektrode von dem $SO_2$-basierten Elektrolyten schlecht benetzt wird. Aufgrund dessen beträgt die Konzentration aller Bindemittel in der positiven Elektrode vorzugsweise höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew%, weiter bevorzugt höchstens 2 Gew%, weiter bevorzugt höchstens 1 Gew% und besonders bevorzugt höchstens 0,5 Gew% bezogen auf das Gesamtgewicht der positiven Elektrode. Die Konzentration aller Bindemittel in der positiven Elektrode liegt vorzugsweise im Bereich zwischen 0,05 Gew% und 20 Gew%, weiter bevorzugt im Bereich zwischen 0,5 Gew% und 10 Gew% und besonders bevorzugt im Bereich zwischen 0,5 Gew% und 5 Gew%. Die zuvor genannten Konzentrationen ermöglichen eine gute Benetzung der positiven Elektrode mit dem auf $SO_2$-basierenden Elektrolyten, eine gute Handhabung der positiven Elektrode sowie eine gute Energiedichte der wiederaufladbaren Batteriezelle mit einer solchen positiven Elektrode.

Elektrolyt

Das erste Leitsalz weist Formel (I) auf,

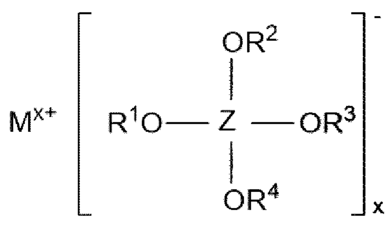

Formel (I)

wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausgewählt sind aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl; und
- wobei Z Aluminium oder Bor ist.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{10}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "$C_2$-$C_{10}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen.

Der Begriff "$C_3$-$C_{10}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_5$-$C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

In einer weiteren vorteilhaften Ausgestaltung der wiederaufladbaren Batteriezellen sind die Substituenten $R^1$, $R^2$, $R^3$ und $R^4$ des ersten Leitsalzes mit der Formel (I) unabhängig voneinander ausgewählt aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

Der Begriff "$C_1$-$C_6$ Alkyl" umfasst im Fall dieser vorteilhaften Ausgestaltung des auf $SO_2$-basierenden Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind $C_2$-$C_4$ Alkyle bevorzugt. Besonders bevorzugt sind die $C_2$-$C_4$ Alkyle 2-Propyl, Methyl und Ethyl.

Der Begriff "$C_2$-$C_6$ Alkenyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei $C_2$-$C_4$ Alkenyle bevorzugt sind. Besonders bevorzugt sind Ethenyl und 1-Propenyl.

Der Begriff "$C_2$-$C_6$-Alkinyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest

eine C-C-Dreifachbindung aufweisen. Hierunter fallen insbesondere Ethinyl, 1-Propinyl, 2-Propinyl, 1-n-Butinyl, 2-n-Butinyl, iso-Butinyl, 1-Pentinyl und 1- Hexinyl. Bevorzugt hierunter sind $C_2$-$C_4$-Alkinyle.

Der Begriff "$C_3$-$C_6$ Cycloalkyl" umfasst im Fall dieser vorteilhaften Ausgestaltung des auf $SO_2$-basierenden Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.

Der Begriff "$C_5$-$C_7$ Heteroaryl" umfasst im Fall dieser vorteilhaften Ausgestaltung des auf $SO_2$-basierenden Elektrolyten Phenyl und Naphtyl.

Zur Verbesserung der Löslichkeit des ersten Leitsalzes in dem auf $SO_2$-basierenden Elektrolyten sind die Substituenten $R^1$, $R^2$, $R^3$ und $R^4$ in einer weiteren vorteilhaften Ausgestaltung der wiederaufladbaren Batteriezelle durch mindestens ein Fluoratom und/oder durch mindestens eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl. Die

chemischen Gruppen $C_1$-$C_4$-Alkyl, $C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten $R^1$, $R^2$, $R^3$ und $R^4$ durch das Fluoratom und/oder durch die chemische Gruppe ersetzt sind.

Eine besonders hohe Löslichkeit des ersten Leitsalzes in dem auf $SO_2$-basierenden Elektrolyten kann dadurch erreicht werden, dass zumindest einer der Substituenten $R^1$, $R^2$, $R^3$ und $R^4$ eine $CF_3$-Gruppe oder eine $OSO_2CF_3$-Gruppe ist.

In einer weiteren vorteilhaften Weiterbildung der wiederaufladbaren Batteriezelle ist das erste Leitsalz gemäß Formel (I) ausgewählt aus der Gruppe, die gebildet wird von

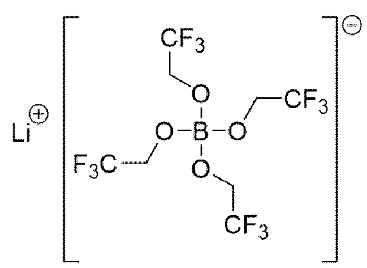

$Li[B(OCH_2CF_3)_4]$

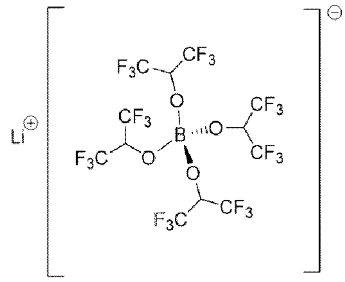

$Li[B(OCH(CF_3)_2)_4]$

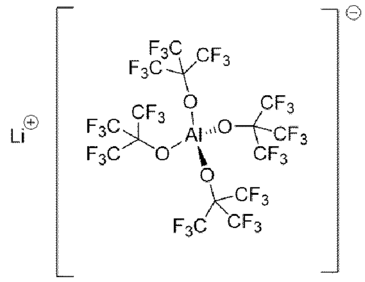

$Li[Al(OC(CF_3)_3)_4]$

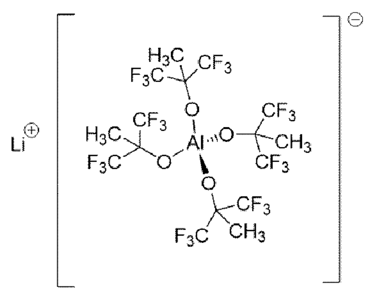

$Li[Al(OC(CH_3)(CF_3)_2)_4]$

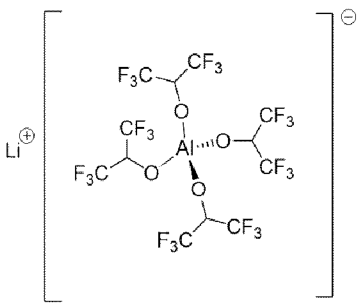

$Li[Al(OCH(CF_3)_2)_4]$

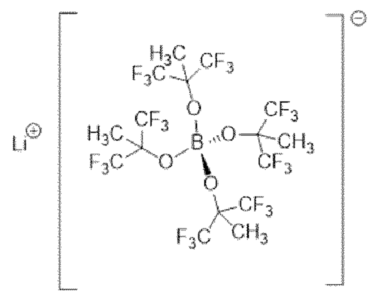

$Li\ [B(OC(CH_3)(CF_3)_2)_4]$

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetrafluor(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und

(iv) 0 bis 10 Gew.-% des Additivs.

Wie bereits zuvor erwähnt, kann der Elektrolyt nicht nur ein erstes Leitsalz und ein zweites Leitsalz enthalten, sondern jeweils auch mehrere erste und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden. Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew% $SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

Aktives Metall

Nachfolgend sind vorteilhafte Weiterbildungen der erfindungsgemäßen wiederaufladbaren Batteriezelle im Hinblick auf das aktive Metall beschrieben:
In einer vorteilhaften Weiterbildung der wiederaufladbare Batteriezelle ist das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

Negative Elektrode

Nachfolgend sind vorteilhafte Weiterbildungen der erfindungsgemäßen wiederaufladbaren Batteriezelle im Hinblick auf die negative Elektrode beschrieben:
Eine weitere vorteilhafte Weiterbildung der wiederaufladbaren Batteriezelle sieht vor, dass die negative Elektrode eine Insertionselektrode ist. Diese Insertionselektrode enthält ein Insertionsmaterial als aktives Material, in welches die Ionen des aktiven Metalls während des Ladens der wiederaufladbare Batteriezelle eingelagert und aus welchem die Ionen des aktiven Metalls während des Entladens der wiederaufladbaren Batteriezelle ausgelagert werden können. Das bedeutet, dass sich die Elektrodenprozesse nicht nur an der Oberfläche der negativen Elektrode, sondern auch im Inneren der negativen Elektrode abspielen können. Wird beispielsweise ein Leitsalz auf Lithium-Basis verwendet, so können Lithiumionen während des Ladens der wiederaufladbaren Batteriezelle in das Insertionsmaterial eingelagert und während des Entladens der wiederaufladbare Batteriezelle aus diesem ausgelagert werden. Vorzugsweise enthält die negative Elektrode als aktives Material bzw. Insertionsmaterial Kohlenstoff, insbesondere in der Modifikation Graphit. Es liegt jedoch auch im Rahmen der Erfindung, dass der Kohlenstoff in Form von Naturgraphit (Flocken-Fördermittel oder gerundet), synthetischem Graphit (Mesophasen Graphit), graphitiertem MesoCarbon MicroBeads (MCMB), mit kohlenstoffbeschichtetem Graphit oder amorphem Kohlenstoff vorliegt.

Die negative Elektrode umfasst in einer weiteren vorteilhaften Weiterbildung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. $Li_4Ti_5O_{12}$).

Eine weitere vorteilhafte Weiterbildung der erfindungsgemäßen wiederaufladbaren Batteriezelle sieht vor, dass die negative Elektrode mit Lithium Legierungsbildende-Anodenaktivmaterialien umfasst. Das sind zum Beispiel Lithiumspeichernde Metalle und Metalllegierungen (z.B. Si, Ge, Sn, $SnCo_xC_y$, $SnSi_x$ und dergleichen) und Oxide der Lithiumspeichernden Metalle und Metalllegierungen (z.B. $SnO_x$, $SiO_x$, oxidische Gläser von Sn, Si und dergleichen).

Die negative Elektrode enthält in einer weiteren vorteilhaften Weiterbildung der erfindungsgemäßen wiederaufladbaren Batteriezelle Konversions-Anodenaktivmaterialien. Diese Konversions-Anodenaktivmaterialien können beispielsweise Übergangsmetalloxide in Form von Manganoxiden ($MnO_x$), Eisenoxiden ($FeO_x$), Cobaltoxiden ($CoO_x$), Nickeloxiden ($NiO_x$), Kupferoxiden ($CuO_x$) oder Metallhydride in Form von Magnesiumhydrid ($MgH_2$), Titanhydrid ($TiH_2$), Aluminiumhydrid ($AlH_3$) und Bor-, Aluminium- und Magnesiumbasierte ternäre Hydride und dergleichen sein. Hierbei ist es wesentlich, dass eine gute elektrische Anbindung eines der zuvor genannten, aktiven Materialien an das planare Ableitelement durch das Bindemittel der negativen Elektrode nicht beeinträchtigt wird. Durch die Verwendung des ersten und zweiten Bindemittels wird eine gute elektrische Anbindung der zuvor genannten aktiven Materialien an das planare Ableitelement der negativen Elektrode ermöglicht, die auch im Betrieb innerhalb einer Batterie beibehalten wird.

In einer weiteren vorteilhaften Weiterbildung der erfindungsgemäßen wiederaufladbaren Batteriezelle umfasst die negative Elektrode ein Metall, insbesondere metallisches Lithium.

Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht.

Die einzelnen Poren der negativen Elektrode können im Betrieb vorzugsweise vollständig mit dem Elektrolyten gefüllt sein.

Die erfindungsgemäße Batteriezelle sieht vor, dass die negative Elektrode ein planares Ableitelement aufweist. Das bedeutet, dass die negative Elektrode neben dem aktiven Material bzw. Insertionsmaterial auch ein planares Ableitelement umfasst. Dieses planare Ableitelement ist vorzugsweise ein dünnes Metallblechs oder eine dünne Metallfolie. Die dünne Metallfolie weist vorzugsweise eine durchbrochene bzw. netzartige Struktur auf. Das planare Ableitelement kann auch eine mit Metall beschichtete Kunststofffolie sein. Diese Metallbeschichtung weist eine Dicke im Bereich von 0,1 μm bis 20μm auf. Das aktive Material der negativen Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 μm bis 50 μm auf. Eine Dicke des planaren Ableitelements im Bereich von 10 μm bis 30 μm ist bevorzugt. Bei der Verwendung von planaren Ableitelementen kann die negative Elektrode eine Gesamtdicke von mindestens 20 μm, bevorzugt mindestens 40 μm und besonders bevorzugt mindestens 60 μm aufweisen. Die maximalen Dicke beträgt höchstens 200 μm, bevorzugt höchstens 150 μm und besonders bevorzugt höchstens 100 μm. Die flächenspezifische Kapazität der negativen Elektrode bezogen auf die Beschichtung einer Seite weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20

mAh/cm². Wenn das Ableitelement planar in Form eines dünnen Metallblechs, einer dünnen Metallfolie oder einer mit Metall beschichteten Kunststofffolie ausgebildet ist, beträgt die Menge des aktiven Materials der negativen Elektrode, d.h. die Beladung der Elektrode, bezogen auf die Beschichtung einer Seite vorzugsweise mindestens 1 mg/cm², bevorzugt mindestens 3 mg/cm², weiter bevorzugt mindestens 5 mg/cm², weiter bevorzugt mindestens 8 mg/cm², weiter bevorzugt mindestens 10 mg/cm², und besonders bevorzugt mindestens 20 mg/cm² auf. Die maximale Beladung der Elektrode, bezogen auf die Beschichtung einer Seite beträgt bevorzugt höchstens 150 mg/cm², weiter bevorzugt höchstens 100 mg/cm² und besonders bevorzugt höchstens 80 mg/cm².

Die negative Elektrode weist in einer weiteren vorteilhaften Weiterbildung der erfindungsgemäßen Batteriezelle zumindest ein weiteres, von dem ersten und dem zweiten Bindemittel abweichendes Bindemittel auf. Dieses weitere Bindemittel ist vorzugsweise

- ein fluoriertes Bindemittel, insbesondere ein Polyvinylidenfluorid (Abk.: PVDF) und/oder ein Terpolymer aus Tetrafluorethylen, Hexafluorpropylen und Vinylidenfluorid, oder
- ein Polymer ist, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist.

Bei dem weiteren Bindemittel in Form des Polymers kann es sich um Lithiumpolyacrylat (LiPAA) handeln. Die negative Elektrode kann auch zwei weitere, von dem ersten und dem zweiten Bindemittel abweichende Bindemittel enthalten. In diesem Fall enthält die negative Elektrode vorzugsweise ein drittes Bindemittel in Form des fluorierten Bindemittels, insbesondere des Polyvinylidenfluorids (Abk.: PVDF) und/oder des Terpolymers aus Tetrafluorethylen, Hexafluorpropylen und Vinylidenfluorid, und ein viertes Bindemittel in Form des Polymers, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist.

Bei der Verwendung des fluorierten Bindemittels besteht das Problem, dass sich diese oft nur in leichtentzündlichen, umweltbelastenden, organischen Lösungsmitteln lösen. Bei der Herstellung von negativen Elektroden mit einem fluorierten Bindemittel müssen aufwändige Apparaturen verwendet werden, die dem Einsatz dieser Lösungsmittel Rechnung tragen. Problematisch sind hierbei insbesondere Explosionsschutz, Umweltschutz und Schutz der exponierten Mitarbeiter. Diese Probleme mussten von der Anmelderin bei der Entwicklung dieser vorteilhaften Weiterbildung der erfindungsgemäßen Batteriezelle berücksichtigt werden. Bei der Entwicklung der wiederaufladbaren Batteriezelle der vorliegenden Patentanmeldung stellte die Anmelderin fest, dass die optimale Konzentration an Bindemittel bezogen auf das Gesamtgewicht der negativen Elektrode schwierig zu ermitteln ist: Eine zu niedriger Konzentration in der negativen Elektrode führte zu einer schlechten Handhabung der hergestellten negativen Elektrode, da z.B. bindemittelfreie Elektroden keine Adhäsion zum Ableitelement aufweisen, es zur Partikelfreisetzung des aktiven Materials und in Folge zur Unbrauchbarkeit der hergestellten wiederaufladbaren Batteriezelle kommen kann. Eine zu hohe Konzentration an Bindemittel wirkt sich wiederum negativ auf die Energiedichte der wiederaufladbaren Batteriezelle aus. Durch das Gewicht des Bindemittels wird nämlich die Energiedichte erniedrigt. Des Weiteren kann eine zu hohe Bindemittelkonzentration dazu führen, dass die negativen Elektroden von dem $SO_2$-basierten Elektrolyten schlecht benetzt werden. Aufgrund dessen beträgt die Konzentration aller Bindemittel in der negativen Elektrode vorzugsweise höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew%, weiter bevorzugt höchstens 2 Gew%, weiter bevorzugt höchstens 1 Gew% und besonders bevorzugt höchstens 0,5 Gew% bezogen auf das Gesamtgewicht negativen Elektrode. Die Konzentration aller Bindemittel in der negativen Elektrode liegt vorzugsweise im Bereich zwischen 0,05 Gew% und 20 Gew%, weiter bevorzugt im Bereich zwischen 0,5 Gew% und 10 Gew% und besonders bevorzugt im Bereich zwischen 0,5 Gew% und 5 Gew%. Die zuvor genannten Konzentrationen ermöglichen eine gute Benetzung der negativen Elektrode mit dem auf $SO_2$-basierenden Elektrolyten, eine gute Handhabung der negativen Elektrode sowie eine gute Energiedichte einer wiederaufladbaren Batteriezelle mit einer solchen negativen Elektrode. Die negative Elektrode weist in einer weiteren vorteilhaften Weiterbildung der erfindungsgemäßen Batteriezelle zumindest ein Leitfähigkeitsadditiv auf. Das Leitfähigkeitsadditiv sollte bevorzugt ein geringes Gewicht, eine hohe chemische Beständigkeit und eine hohe spezifische Oberfläche aufweisen, Beispiele für Leitfähigkeitsadditive sind partikulärer Kohlenstoff (carbon black, Super P, acetylen black), faserartiger Kohlenstoff (CarbonNanoTtubes CNT, Kohlenstoff(nano)fasern), feinverteilte Graphite und Graphen(-Nanosheets).

Aufbau der wiederaufladbaren Batteriezelle Nachfolgend sind vorteilhafte Weiterbildungen der erfindungsgemäßen wiederaufladbaren Batteriezelle im Hinblick auf deren Aufbau beschrieben:

Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere Hochvoltelektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt.

Die wiederaufladbare Batteriezelle kann jedoch auch als Wickelzelle ausgebildet sein, bei welcher die Elektroden aus dünnen Lagen bestehen, die zusammen mit einem Separatormaterial aufgewickelt sind. Die Separatoren trennen einerseits die positive Elektrode und die negative Elektrode räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen. Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede Hochvoltelektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2: zeigt ein Detail des ersten Ausführungsbeispiels aus Figur 1;

Figur 3: zeigt ein zweites Ausführungsbeispiel der erfindungsgemäßen wiederaufladbaren Batteriezelle in einer Explosionsdarstellung;

Figur 4: zeigt ein drittes Ausführungsbeispiel der erfindungsgemäßen wiederaufladbaren Batteriezelle in einer Explosionsdarstellung;

Figur 5: zeigt das Potential in [V] als Funktion der Kapazität, die bezogen ist auf die theoretische Kapazität der negativen Elektrode, während einer Deckschichtbildung, von drei Test-Vollzellen mit Elektroden, die verschiedene Bindemittelkombinationen und dreidimensionale Ableitelemente aufweisen und mit einem Lithiumtetrachloroaluminat-Elektrolyten aus Beispiel 1 befüllt sind;

Figur 6: zeigt die Entladekapazität als Funktion der Zykelzahl von drei Test-Vollzellen, mit Elektroden die verschiedene Bindemittelkombinationen und dreidimensionale Ableitelemente aufweisen und die mit dem Lithiumtetrachloroaluminat-Elektrolyten aus Beispiel 1 befüllt sind;

Figur 7: zeigt das Potential in [V] als Funktion der Kapazität von drei Halbzellen mit Elektroden, die verschiedene Bindemittelkombinationen und planare Ableitelemente aufweisen und die mit dem Elektrolyten 1 aus Beispiel 1 befüllt sind;

Figur 8: zeigt die Entladekapazität als Funktion der Zykelzahl von zwei Halbzellen mit Elektroden, die verschiedene Bindemittelkombinationen und planare Ableitelemente aufweisen und die mit dem Elektrolyten 1 aus Beispiel 1 befüllt sind;

Figur 9: zeigt das Potential in [V] als Funktion der Kapazität, die bezogen ist auf die theoretische Kapazität der negativen Elektrode, von drei Wickelzellen, mit Elektroden, die verschiedene Bindemittelkombinationen und planare Ableitelemente aufweisen und die mit dem Elektrolyten 1 aus Beispiel 1 befüllt sind, beim Laden während einer Deckschichtbildung auf der negativen Elektrode;

Figur 10: zeigt die Entladekapazität als Funktion der Zykelzahl von zwei Wickelzellen mit Elektroden, die verschiedene Bindemittelkombinationen und planare Ableitelemente aufweisen und die mit dem Elektrolyten 1 aus Beispiel 1 befüllt sind;

Figur 11: zeigt das Potential in [V] als Funktion der Kapazität, die bezogen ist auf die theoretische Kapazität der negativen Elektrode von drei Test-Vollzellen, die mit den Elektrolyten 1 und 3 und dem Lithiumtetrachloroaluminat-Elektrolyten aus Beispiel 1 befüllt wurden, beim Laden während einer Deckschichtbildung auf der negativen Elektrode;

Figur 12: zeigt den Potentialverlauf bei der Entladung in Volt [V] als Funktion der prozentualen Ladung von drei Test-Vollzellen, die mit den Elektrolyten 1, 3, 4 und 5 aus Beispiel 1 befüllt wurden und Lithiumnickelmangancobaltoxid (NMC) als aktives Elektrodenmaterial enthielten;

Figur 13: zeigt die Leitfähigkeiten in [mS/cm] der Elektrolyten 1 und 4 aus Beispiel 1 in Abhängigkeit von der Konzentration der Verbindungen 1 und 4; und

Figur 14: zeigt die Leitfähigkeiten in [mS/cm] des Elektrolyten 3 und 5 aus Beispiel 1 in Abhängigkeit von der Konzentration der Verbindungen 3 und 5.

Figur 1 zeigt ein erstes Ausführungsbeispiel einer erfindungsgemäßen wiederaufladbaren Batteriezelle 20 in Querschnittsdarstellung. Dieses erste Ausführungsbeispiel zeigt eine Elektrodenanordnung mit einer positiven Elektrode 23 und zwei negativen Elektroden 22. Die Elektroden 22, 23 sind jeweils durch Separatoren 21 voneinander getrennt und von einem Gehäuse 28 umgeben. Die positive Elektrode 23 weist ein Ableitelement 26 in Form einer planaren Metallfolie auf, auf welche eine homogene Mischung aus dem aktiven Material 24 der positiven Elektrode 23, einem ersten Bindemittel SBR und einem zweiten Bindemittel CMC beidseitig aufgebracht ist. Die negativen Elektroden 22 umfassen ebenfalls ein Ableitelement 27 in Form einer planaren Metallfolie, auf welche eine homogene Mischung aus dem aktiven Material 25 der negativen Elektrode 22, dem ersten Bindemittel SBR und dem zweiten Bindemittel CMC beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Wand des Gehäuses 28. Die Elektroden 22, 23 sind über Elektrodenanschlüsse 29, 30 mit entsprechenden Anschlusskontakten 31, 32 der wiederaufladbaren Batteriezelle 20 verbunden.

Figur 2 zeigt die planare Metallfolie, welche jeweils als Ableitelement 26, 27 für die positive Elektroden 23 und die negativen Elektroden 22 im zweiten Ausführungsbeispiel aus Figur 1 dient. Diese Metallfolie weist eine durchbrochene bzw. netzartige Struktur mit einer Dicke von 20 $\mu$m auf.

Figur 3 zeigt ein zweites Ausführungsbeispiel der erfindungsgemäßen wiederaufladbaren Batteriezelle 40 in Explosionsdarstellung. Dieses zweite Ausführungsbeispiel unterscheidet sich von dem zuvor erläuterten ersten Ausführungsbeispiel dadurch, dass die positive Elektrode 44 von einer Umhüllung 13 umhüllt ist, welche als Separator dient. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

Figur 4 zeigt ein drittes Ausführungsbeispiel einer erfindungsgemäßen wiederaufladbaren Batteriezelle 101 in

Explosionsdarstellung. Gezeigt sind die wesentlichen Konstruktionselemente einer Batteriezelle 101 mit einer gewickelten Elektrodenanordnung. In einem zylindrischen Gehäuse 102 mit einem Deckelteil 103 befindet sich eine Elektrodenanordnung 105, die aus einem bahnförmigen Ausgangsmaterial gewickelt ist. Die Bahn besteht aus mehreren Schichten, zu denen eine positive Elektrode, eine negative Elektrode und ein zwischen den Elektroden verlaufender Separator gehört, der die Elektroden elektrisch und mechanisch voneinander isoliert, jedoch ausreichend porös bzw. ionenleitend ist, um den erforderlichen Ionenaustausch zu ermöglichen. Die positive Elektrode weist ein Ableitelement in Form einer planaren Metallfolie auf, auf welche eine homogene Mischung aus dem aktiven Material 24 der positiven Elektrode 23, einem ersten Bindemittel SBR und einem zweiten Bindemittel CMC beidseitig aufgebracht ist. Die negative Elektrode umfasst ebenfalls ein Ableitelement in Form einer planaren Metallfolie, auf welche eine homogene Mischung aus dem aktiven Material 25 der negativen Elektrode 22, dem ersten Bindemittel SBR und dem zweiten Bindemittel CMC beidseitig aufgebracht ist.

Der Hohlraum des Gehäuses 102 ist, soweit er nicht von der Elektrodenanordnung 105 eingenommen wird, mit einem nicht dargestellten Elektrolyten gefüllt. Die positive und negative Elektrode der Elektrodenanordnung 105 sind über entsprechende Anschlussfahnen 106 für die positive Elektrode und 107 für die negative Elektrode mit den Anschlusskontakten 108 für die positive Elektrode und 109 für die negative Elektrode verbunden, die den elektrischen Anschluss der wiederaufladbaren Batteriezelle 101 ermöglichen. Alternativ zu dem in Figur 4 gezeigten elektrischen Anschluss der negativen Elektrode mittels der Anschlussfahne 107 und dem Anschlusskontakt 109, kann der elektrische Anschluss der negativen Elektrode auch über das Gehäuse 102 erfolgen.

<u>Beispiel 1</u>: Herstellung von Ausführungsbeispielen eines auf $SO_2$-basierenden Elektrolyten für eine Batteriezelle

Der für die nachfolgend beschriebenen Experimente verwendete Elektrolyt $LiAlCl_4 * x\ SO_2$ wurde nach dem in der Patentschrift EP 2 954 588 B1 beschriebenen Verfahren hergestellt (im Nachfolgenden bezeichnet als [V6]). Zunächst wurde Lithiumchlorid (LiCl) unter Vakuum bei 120 °C für drei Tage getrocknet. Aluminiumpartikel (Al) wurden unter Vakuum für zwei Tage bei 450 °C getrocknet. LiCl, Aluminiumchlorid ($AlCl_3$) und Al wurden in einem Molverhältnis $AlCl_3$:LiCl:Al von 1:1,06:0,35 in einer Glasflasche mit einer Öffnung, die den Austritt von Gas ermöglicht, miteinander vermischt. Daraufhin wurde diese Mischung stufenweise zur Herstellung einer Salzschmelze wärmebehandelt. Nach dem Abkühlen wurde die gebildete Salzschmelze gefiltert, danach auf Raumtemperatur abgekühlt und letztlich $SO_2$ zugeführt, bis das gewünschte molare Verhältnis von $SO_2$ zu $LiAlCl_4$ gebildet wurde. Der so gebildete Elektrolyt hatte die Zusammensetzung $LiAlCl_4 * x\ SO_2$, wobei x abhängig von der zugeführten Menge an $SO_2$ ist. In den Experimenten wird dieser Elektrolyt als Lithiumtetrachloroaluminat-Elektrolyt bezeichnet.

Für die nachfolgend beschriebenen Experimente wurden weiterhin fünf Ausführungsbeispiele 1, 2, 3, 4 und 5 des auf $SO_2$-basierenden Elektrolyten mit einem Leitsalz der Formel (I) hergestellt (nachfolgend bezeichnet als Elektrolyte 1, 2, 3, 4 und 5). Hierfür wurden zunächst fünf unterschiedliche erste Leitsalze nach Formel (I) gemäß einem in den folgenden Dokumenten [V7], [V8] und [V9] beschriebenen Herstellungsverfahren hergestellt:

[V7] "I. Krossing, Chem. Eur. J. 2001, 7, 490;
[V8] S. M. Ivanova et al., Chem. Eur. J. 2001, 7, 503;
[V9] Tsujioka et al., J. Electrochem. Soc., 2004, 151, A1418"

Diese fünf unterschiedlichen, ersten Leitsalze nach Formel (I) werden nachfolgend als Verbindungen 1, 2, 3, 4 und 5 bezeichnet. Sie stammen aus der Familie der Polyfluoroalkoxyaluminate und wurden gemäß folgender Reaktionsgleichung ausgehend von $LiAlH_4$ und dem entsprechenden Alkohol R-OH mit $R^1=R^2=R^3=R^4$ in Hexan hergestellt.

$$LiAlH_4 + 4\ HO\text{-}R \xrightarrow{\text{Hexan}} LiAl(OR)_4 + 4\ H_2$$

Hierdurch wurden die nachfolgend darstellten Verbindungen 1, 2, 3, 4 und 5 mit den Summen- bzw. Strukturformeln gebildet:

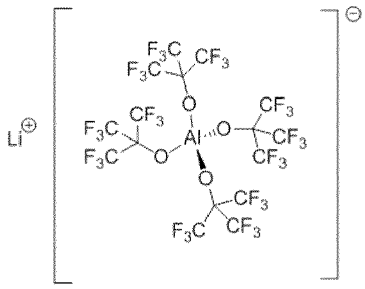

$Li[Al(OC(CF_3)_3)_4]$

Verbindung 1

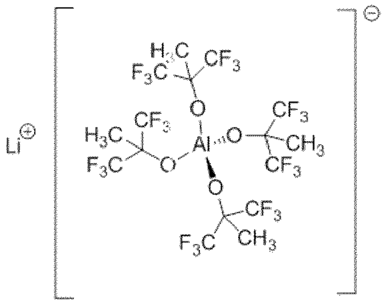

$Li[Al(OC(CH_3)(CF_3)_2)_4]$

Verbindung 2

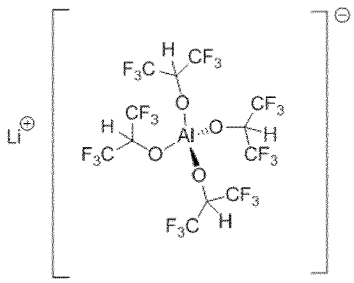

$Li[Al(OCH(CF_3)_2)_4]$

Verbindung 3

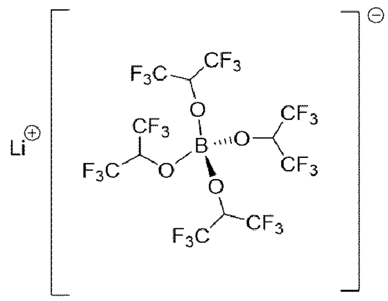

$Li[B(OCH(CF_3)_2)_4]$

Verbindung 4

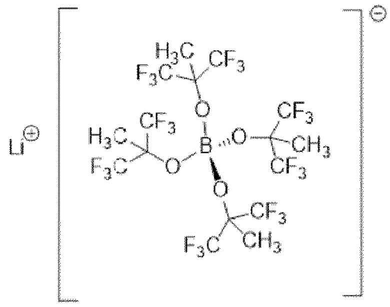

$Li[B(OC(CH_3)(CF_3)_2)_4]$

Verbindung 5

Zur Aufreinigung wurden die Verbindungen 1, 2, 3, 4 und 5 zunächst umkristallisiert. Hierdurch wurden Reste des Edukts $LiAlH_4$ aus dem ersten Leitsalz entfernt, da dieses Edukt möglicherweise mit eventuell vorhandenen Wasserspuren in $SO_2$ zur Funkenbildung führen könnte.

Danach erfolgte die Lösung der Verbindungen 1, 2, 3, 4 und 5 in $SO_2$. Hierbei wurde herausgefunden, dass sich die Verbindungen 1, 2, 3, 4 und 5 in $SO_2$ gut lösen.

Die Herstellung der Elektrolyte 1, 2, 3, 4 und 5 wurde bei Tieftemperatur oder unter Druck gemäß den nachfolgend aufgelisteten Verfahrensschritten 1 bis 4 durchgeführt:

1) Vorlage der jeweiligen Verbindung 1, 2, 3, 4 und 5 in jeweils einem Druckkolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Die jeweilige Konzentration der Verbindungen 1, 2, 3, 4 und 5 in den Elektrolyten 1, 2, 3, 4 und 5 betrug 0,6 mol/l (Stoffmengenkonzentration bezogen auf 1 Liter des Elektrolyten), sofern in der Experimentbeschreibung nichts Anderes beschrieben ist.

Mit dem Lithiumtetrachloroaluminat-Elektrolyten und den Elektrolyten 1, 2, 3, 4 und 5 wurden die nachfolgend beschriebenen Experimente durchgeführt.

Beispiel 2: Herstellung von Test-Vollzellen

Die in den nachfolgend beschriebenen Experimenten verwendeten Test-Vollzellen sind wiederaufladbare Batteriezellen mit zwei negativen Elektroden und einer positiven Elektrode, welche jeweils durch einen Separator getrennt waren. Die positiven Elektroden wiesen ein aktives Material, einen Leitfähigkeitsvermittler und zwei Bindemittel auf. Die negativen Elektroden enthielten Graphit als aktives Material und ebenfalls zwei Bindemittel. Wie im Experiment erwähnt, können die negativen Elektroden auch ein Leitfähigkeitsadditiv enthalten. Das aktive Material der positiven Elektrode ist im jeweiligen Experiment benannt. Unter anderem ist das Ziel der Untersuchungen, die Verwendung von verschiedenen Bindemitteln bzw. einer Kombination von Bindemitteln für Elektroden mit planaren Ableitelementen in einer erfindungsgemäßen Batteriezelle mit auf $SO_2$-basierendem Elektrolyt zu bestätigen. Tabelle 2a zeigt, welche Bindemittel untersucht

wurden. Tabelle 2b sind die in den Experimenten verwendeten Bindemittelkombinationen zu entnehmen.

Die Test-Vollzellen wurden jeweils mit dem für die Experimente benötigten Elektrolyten, d. h. entweder mit dem Lithiumtetrachloroaluminat-Elektrolyten oder den Elektrolyten 1, 2, 3, 4 oder 5 befüllt. Für jedes Experiment wurden meistens mehrere, d.h. zwei bis vier identische Test-Vollzellen hergestellt. Die in den Experimenten vorgestellten Ergebnisse sind dann jeweils Mittelwerte aus den für die identischen Test-Vollzellen erhaltenen Messwerte.

Tabelle 2a: Untersuchte Bindemittel

| **Bindemittel** | **Abkürzung** |
|---|---|
| Styrol-Butadien-Kautschuk (als Beispiel für das erste Bindemittel) | SBR |
| Carboxymethylcellulose (als Beispiel für das zweite Bindemittel) | CMC |
| Polyvinylidenfluorid (als Beispiel für das dritte Bindemittel) | PVDF |
| Lithiumpolyacrylat (als Beispiel für das vierte Bindemittel) | LiPAA |

Tabelle 2b: Übersicht Experimente (% entspricht Gew%)

| **Experiment** | **Bindemittelkombinationen** | **Typ Ableitelement/ Elektrolyt** |
|---|---|---|
| 1 | 2,0 % LiPAA/ 2,0 % CMC<br>2,0 % LiPAA/ 2,0 % SBR<br>2,0 % SBR/ 2,0 % CMC | Dreidimensional/ Lithiumtetrachloroaluminat-Elektrolyt |
| 2 Adhäsion | 1,0% CMC/ 2,0 % LiPAA/ 1,0% SBR<br>1,0% SBR/ 2,0% CMC | Planar |
| 2 Beladung | 2,0 % LiPAA/ 2,0% CMC<br>2,0% SBR/ 2,0% CMC | Planar |
| 3 | 3,0 % SBR/ 1,0 % CMC<br>2,0 % SBR/ 2,0 % CMC<br>2,0 - 4,0 % PVDF | Planar/ Elektrolyt 1 |
| 4 Deckschichtkapazität | 2,5 % SBR/ 1,5 % CMC<br>2,0 % SBR/ 2,0 % CMC<br>1,0 % SBR/ 2,0 % CMC | Planar/ Elektrolyt 1 |
| 4 Entladekapazität | 2,5% SBR/ 1,5% CMC<br>2,0% SBR/ 2,0% CMC | Planar/ Elektrolyt 1 |
| 5-7 | Untersuchung Elektrolyteigenschaften | Elektrolyt 1, Elektrolyt 3<br>Elektrolyt 4, Elektrolyt 5 |

Beispiel 3: Messung in Test-Vollzellen

Deckschichtkapazität:

Die im ersten Zyklus verbrauchte Kapazität für die Bildung einer Deckschicht auf der negativen Elektrode ist ein wichtiges Kriterium für die Qualität einer Batteriezelle. Diese Deckschicht wird beim ersten Laden der Test-Vollzelle auf der negativen Elektrode gebildet. Für diese Deckschichtbildung werden Lithiumionen irreversibel verbraucht (Deckschichtkapazität), sodass der Test-Vollzelle weniger zykelbare Kapazität für die Folgezyklen zur Verfügung steht. Die Deckschichtkapazität in % der Theorie, die zur Bildung der Deckschicht auf der negativen Elektrode verbraucht wurde, berechnet sich gemäß nachfolgend genannter Formel:

$$\text{Deckschichtkapazität [in \% der Theorie]} = (Q_{lad}\ (x\ mAh) - Q_{ent}\ (y\ mAh))\ /\ Q_{NEL}$$

$Q_{lad}$ beschreibt die im jeweiligen Experiment vorgegebene Ladungsmenge in mAh; $Q_{ent}$ beschreibt diejenige Ladungsmenge in mAh, die beim anschließenden Entladen der Test-Vollzelle erhalten wurde. Bei $Q_{NEL}$ handelt es sich um die theoretische Kapazität der verwendeten negativen Elektrode. Die theoretische Kapazität berechnet sich z.B. im Fall von Graphit auf einen Wert von 372 mAh/g.

Entladekapazität:

Bei Messungen in Test-Vollzellen wird z.B. die Entladekapazität über die Zykelzahl bestimmt werden. Dazu werden die Test-Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential. Bei dieser Lademethode spricht man von einer I/U-Ladung. Dieser Vorgang wird je nach gewünschter Zykelzahl wiederholt.

Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.

Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.

Bevorzugt erfolgt die Ladung der Batterie mit einer Stromrate von C/2 und bei einer Temperatur von 22°C. Mit einer Lade- bzw. Entladerate von 1C wird definitionsgemäß die Nennkapazität einer Zelle in einer Stunde ge- bzw. entladen. Eine Laderate von C/2 bedeutet demnach eine Ladezeit von 2 Stunden.

Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.

Bevorzugt erfolgt die Entladung der Batterie mit einer Stromrate von C/2 und bei einer Temperatur von 22°C.

Die Entladekapazität wird aus dem Entladestrom und der Zeit, bis die Kriterien zur Beendigung der Entladung erfüllt sind, erhalten. Die dazugehörigen

Figuren zeigen Mittelwerte für die Entladekapazitäten als Funktion der Zykelzahl. Diese Mittelwerte der Entladekapazitäten werden, oft normiert auf die maximale Kapazität, die im jeweiligen Versuch erreicht wurde und jeweils in Prozent der Nennkapazität ausgedrückt.

Experiment 1: Untersuchungen von verschiedenen Bindemittelkombinationen in Test-Vollzellen mit einem dreidimensionalen Ableitelement

Wiederaufladbare Batterien mit auf $SO_2$-basierendem Elektrolyt aus dem Stand der Technik verwenden hauptsächlich Elektroden mit einem dreidimensionalen Ableitelement z.B. aus Nickelschaum (vgl. [V5]). Ein bevorzugtes Bindemittel für die negative Elektrode ist Lithiumpolyacrylat (LiPAA) (vgl. [V4]). Es wurden negative Elektroden (NEL) mit Graphit als aktives Material und verschiedenen Bindemittelkombinationen hergestellt. Alle Elektroden umfassten das aus dem Stand der Technik bekannte, dreidimensionale Ableitelement in Form eines Nickelschaums. Bei den Bindemittelkombinationen handelt es sich um

- 2 Gew% LiPAA/ 2 Gew% CMC,
- 2 Gew% LiPAA/ 2 Gew% SBR und
- 2 Gew% SBR/ 2 Gew% CMC.

Jeweils zwei identische negative Elektroden wurden zusammen mit einer positiven Elektrode, die Lithiumeisenphosphat (LEP) als aktives Elektrodenmaterial enthielt, zu einer Test-Vollzelle 1 gemäß Beispiel 2 zusammengefügt. Es wurden drei Testvollzellen erhalten, die sich in der Bindemittelkombination innerhalb der negativen Elektrode unterschieden. Alle drei Test-Vollzellen wurden mit einem Lithiumtetrachloroaluminat-Elektrolyten gemäß Beispiel 1 der Zusammensetzung $LiAlCl_4 * 6 SO_2$ befüllt.

Zunächst wurden im ersten Zyklus die Deckschichtkapazitäten gemäß Beispiel 3 bestimmt.

Dazu wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).

Figur 5 zeigt jeweils das Potenzial in Volt der verschiedenen Test-Vollzellen beim Laden der negativen Elektrode als Funktion der Kapazität in [%], die bezogen ist auf die theoretische Kapazität der negativen Elektrode.

Die ermittelten Deckschichtkapazitäten [in % der Theorie der Kapazität der negativen Elektrode] der verschiedenen negativen Elektroden liegen bei folgenden Werten:

NEL 2% SBR/ 2% CMC: 7,48 % d. th. NE
NEL 2% LiPAA/ 2% CMC: 7,15 % d. th. NE
NEL 2% LiPAA/ 2% SBR: 9,34 % d. th. NE

Die Deckschichtkapazitäten liegen bei der Bindemittelkombination 2% LiPAA/ 2% CMC am niedrigsten.

Zur Ermittlung der Entladekapazitäten (siehe Beispiel 3) wurden die Test-Vollzellen mit einem Strom von 100 mA bis zu einem oberen Potentialen von 3,6 Volt geladen. Das Potential von 3,6 Volt wurde solange beibehalten, bis der Strom auf 40 mA gesunken war. Danach erfolgte die Entladung mit einem Entladestrom von 100 mA bis zu einem Entladepotential von 2,5 Volt.

Figur 6 zeigt Mittelwerte für die Entladekapazitäten der Test-Vollzellen als Funktion der Zykelzahl. Es wurden 500 Zyklen durchgeführt. Diese Mittelwerte der Entladekapazitäten werden jeweils in Prozent der Nennkapazität [% Nennkapazität] ausgedrückt.

Der Verlauf der Entladekapazitäten der Test-Vollzellen zeigt einen gleichmäßigen, leichtabnehmenden Verlauf. Die Kapazitätsabnahme ist jedoch bei denjenigen Test-Vollzellen am geringsten, die Graphitelektroden mit der Bindemittelkombination 2% LiPAA/ 2% CMC enthielten.

Bei der Verwendung eines dreidimensionalen Ableitelements in Form des Nickelschaum-Ableitelements zeigt die negative Elektrode mit der Bindemittelkombination 2% LiPAA/ 2% CMC eine geringere Deckschichtkapazität und ein besseres Zykelverhalten als die negativen Elektroden mit den Bindemittelkombinationen 2% LiPAA/ 2% SBR oder 2% SBR/ 2% CMC. Damit werden auch die Aussagen von [V4] bestätigt, nachdem ein Bindemittel, das LiPAA enthält, einen positiven Effekt bei der Verwendung eines dreidimensionalen Ableitelements in Form eines Nickelschaum-Ableitelement besitzt.

Experiment 2: Mechanische Untersuchungen von Graphit mit verschiedenen Bindemitteln auf einem planaren Ableitelement

Um die Eigenschaften von Graphit mit verschiedenen Bindemitteln auf einem planaren Ableitelement zu untersuchen, wurden zunächst mechanische Untersuchungen durchgeführt. Zum einen wurde Werte für die Adhäsion der Elektrodenmasse am planaren Ableitelement ermittelt und zum anderen wurden Versuche zur Beladung, also zur Menge an aktiver Masse pro $cm^2$ Elektrodenfläche, durchgeführt.

Zur Untersuchung der Adhäsion von Graphit mit zwei verschiedenen Bindemittelkombinationen auf einem planaren Ableitelement wurden Untersuchungen mit einer Zug-/Druckprüfmaschine Modell T1000 von der Firma MFC Sensortechnik durchgeführt. Bei den Untersuchungen handelte es sich um 90° Peel-Tests. Ein Peel-Test wird für die Überprüfung der Eigenschaften einer mit Substrat verbundenen Folie mittels eines Zugversuches verwendet. Die zu untersuchenden, beschichteten Folien wurde auf einer Trägerplatte befestigt, danach ein freies Ende in die Zugprüfmaschine eingespannt und mit einer konstanten Geschwindigkeit von 100 mm/min nach oben gezogen. Dabei wurde das planare Ableitelement in Form einer Ableiterfolie von der Elektrodenschicht abgelöst und die Adhäsionskraft entlang der Elektrodenfolie aufgenommen. Es wurden zwei Graphitelektroden mit den Bindemitteln CMC-LiPAA-SBR (1%-2%-1%) (Elektrode 1) und mit den Bindemitteln CMC-SBR (2%-1%) (Elektrode 2) auf einer Metallfolie als planares Ableitelement untersucht. Tabelle 3 zeigt die Ergebnisse der Adhäsionsmessungen.

Tabelle 3: Ergebnisse der Adhäsionsmessungen

| | Elektrode 1 | Elektrode 2 |
|---|---|---|
| Bindemittelkombination | CMC-LiPAA-SBR (1%-2%-1%) | CMC-SBR (2%-1%) |
| Adhäsion (N/m) | 5,4 | 13,4 |

Der Graphit mit der Bindemittelkombination mit LiPAA-Anteil hat einen wesentlich geringeren Adhäsionswert als der von Graphit mit der Bindemittelkombination ohne LiPAA-Anteil. Das bedeutet, dass bei Elektrode 1 die Haftung des Graphits auf dem Ableitelement schlechter ist und mechanische Belastungen beim Betrieb der Batteriezelle zum Abplatzen der Elektrodenmasse führen können. Elektroden mit der CMC/SBR-Bindemittelkombination haften dagegen gut auf dem planaren Ableitelement.

Die mögliche Beladung, also die Menge an aktiver Masse pro $cm^2$ Elektrodenfläche, von einem planaren Ableitelement wurde untersucht. Zur Herstellung planarer Elektroden wurde eine Mischung aus Graphit und Bindemitteln hergestellt und zusammen mit einem Lösungsmittel zu einer homogenen Paste verarbeitet. Die fertige Paste wurde homogen auf eine Metallfolie aufgebracht und an Luft oder bei niederen Temperaturen im Ofen getrocknet. Dieser Schritt ist erforderlich, um die Elektroden lösemittelfrei zu bringen. Nach dem Abkühlen wurde die Elektrode mittels eines Kalanders verdichtet.

Es wurden zum einen Graphitelektroden mit einem Bindemittelgemisch aus LiPAA (2 Gew%) und CMC (2 Gew%) und zum anderen Graphitelektroden mit einem Bindemittelgemisch aus SBR (2 Gew%) und CMC (2 Gew%) hergestellt. Aufgrund der schlechteren mechanischen Eigenschaften von LiPAA auf planaren Elektroden konnten nur ca. 5 $mg/cm^2$ an Graphit/Bindemittel auf die Metallfolie aufgebracht werden. Bei Verwendung des SBR/CMC-Bindemittelgemisches konnte ein gewünschter Auftrag von 14 mg/cm$^2$ erfolgen. Um Elektroden mit einer hohen Beladung und damit einer hohen Kapazität herzustellen ist die Bindemittelkombination SBR/CMC gut geeignet.

Experiment 3: Untersuchungen von verschiedenen Bindemittelkombinationen in Halbzellen mit planaren Ableitelementen und befüllt mit Elektrolyt 1

Zunächst wurden Graphitelektroden mit verschiedenen Bindemittelkombinationen in Halbzellen mit Drei-Elektroden-Anordnung untersucht, wobei die Bezugs- und Gegenelektrode jeweils aus metallischem Lithium bestand. Der in der Halbzelle verwendete Elektrolyt war Elektrolyt 1 gemäß Beispiel 1. Folgende Bindemittelkombinationen auf einem planarem Ableitelement wurden verwendet:

- Graphitelektrode mit 3,0 Gew% SBR und 1,0 Gew% CMC
- Graphitelektrode mit 2,0 Gew% SBR und 2,0 Gew% CMC
- Graphitelektrode mit ca. 2,0 - 4,0 Gew% PVDF

Da im Stand der Technik (siehe [V3] und [V5]) auch PVDF als geeignetes Bindemittel vorgeschlagen wird, wurden Graphitelektroden mit diesem Bindemittel ebenfalls untersucht. Zunächst wurden die Deckschichtkapazitäten bestimmt. Die Halbzellen wurden dazu mit einer Rate von 0,1 C bis zu einem Potential von 0,03 V geladen und mit der gleichen Rate bis zu einem Potential von 0,5 V entladen. Aus dem Kapazitätsverlust des ersten Zyklus wurde die Deckschichtkapazität berechnet. Figur 7 zeigt jeweils das Potenzial in Volt der verschiedenen Test-Vollzellen beim Laden der negativen Elektrode als Funktion der Kapazität in [%], die bezogen ist auf die theoretische Kapazität der negativen Elektrode.

Die ermittelten Deckschichtkapazitäten [in % der Theorie der Kapazität der negativen Elektrode] liegen wie folgt bei den verschiedenen Elektroden:

| | |
|---|---|
| NEL 3% SBR/ 1% CMC: | 14,0 % d. th. NE |
| NEL 2% SBR/ 2% CMC: | 14,0 % d. th. NE |
| NEL 2,0 - 4,0 Gew% PVDF: | 21,5 % d. th. NE |

Die Deckschichtkapazität der negativen Elektrode mit PVDF-Bindemittel liegt mit 21,5% sehr hoch. Das bedeutet, dass fast ein Viertel der Batteriekapazität schon zur Deckschichtbildung verbraucht wird. Die alleinige Verwendung von PVDF-Bindemittel für Elektroden mit einem planaren Ableitelement ist in wiederaufladbaren Batteriezellen mit einem auf $SO_2$-basierenden Elektrolyt nicht geeignet. Dieses PVDF-Bindemittel kann allerdings als zusätzliches, drittes Bindemittel neben der SBR/CMC-Bindemittelkombination verwendet werden.

Die Elektroden mit SBR/CMC-Bindemittel weisen dagegen eine geringere Deckschichtkapazität auf.

Zur Ermittlung der Entladekapazitäten (siehe Beispiel 3) wurden die Halbzellen mit SBR/CMC-Bindemittel in Zyklus 1 bis 5 mit einer Laderate von 0,1 C bis zu einem Potential von 0,03 Volt geladen und bis zu einem Potential von 0,5 Volt entladen. Ab Zyklus 6 wurde die Lade- und Entladerate auf 1 C erhöht. Außerdem wurde Beim Laden das Potential von 0,03 Volt solange beibehalten, bis die Laderate auf 0,01 C gesunken war. Figur 8 zeigt Mittelwerte für die Entladekapazitäten der beiden Halbzellen als Funktion der Zykelzahl. Es wurden 25 (2%SBR/ 2%CMC) bzw. 50 (3%SBR/ 1% CMC) Zyklen durchgeführt. Diese Mittelwerte der Entladekapazitäten werden jeweils in Prozent der Nennkapazität [% Nennkapazität] ausgedrückt. Beide Halbzellen zeigen einen stabilen Verlauf der Entladekapazität. Die Kombination von SBR- und CMC-Bindemittel ist für Elektroden mit einem planaren Ableitelement in dem auf $SO_2$-basierenden Elektrolyten sehr gut geeignet.

Experiment 4: Untersuchungen von verschiedenen Bindemittelkombinationen in Wickelzellen mit planaren Ableitelementen und befüllt mit Elektrolyt 1

Neben den Halbzellen-Experimenten wurden Wickelzellen mit einer positiven Elektrode, die Lithiumnickelmangancobaltoxid (NMC811) als aktives Material enthielt, und einer negativen Graphitelektrode mit folgenden Bindemittelkombinationen untersucht:

- 2,5 Gew% SBR/ 1,5 Gew% CMC
- 2,0 Gew% SBR/ 2,0 Gew% CMC
- 1,0 Gew% SBR/ 2,0 Gew% CMC

Zunächst wurden im ersten Zyklus die Deckschichtkapazitäten gemäß Beispiel 3 bestimmt. Dazu wurden die

Wickelzellen mit einem Strom von 0,1 A geladen, bis eine Kapazität von 0,9 Ah ($Q_{lad}$) erreicht war. Danach erfolgte die Entladung der Wickelzellen mit 0,1 A bis zum Erreichen eines Potentials von 2,5 Volt. Daraus erfolgte die Ermittlung der Entladekapazität ($Q_{ent}$).

Figur 9 zeigt jeweils das Potenzial in Volt der verschiedenen Wickelzellen beim Laden der negativen Elektrode als Funktion der Kapazität in [%], die bezogen ist auf die theoretische Kapazität der negativen Elektrode. Die ermittelten Deckschichtkapazitäten [in % der Theorie der Kapazität der negativen Elektrode] liegen bei den drei untersuchten Wickelzellen bei ca. 11% d. th. NE und damit bei guten Werten.

Zur Ermittlung der Entladekapazitäten (siehe Beispiel 3) wurden die Wickelzellen mit den Bindemittelkombinationen 2,5% SBR/ 1,5% CMC und 2,0% SBR/ 2,0% CMC mit einem Strom von 0,2 A bis zu einem oberen Potentialen von 4,2 Volt geladen. Danach erfolgte die Entladung mit einem Entladestrom von 0,2 A bis zu einem Entladepotential von 2,8 Volt. Die Ladespannung wurde auf 4,4 Volt und dann auf 4,6 erhöht, die bei allen weiteren Zyklen beibehalten wurde.

Figur 10 zeigt Mittelwerte für die Entladekapazitäten der Wickelzellen als Funktion der Zykelzahl. Es wurden 15 (2,5%SBR/ 1,5%CMC) bzw. 60 (2,0%SBR/ 2,0%CMC) Zyklen durchgeführt. Diese Mittelwerte der Entladekapazitäten werden jeweils in Prozent der Nennkapazität [% Nennkapazität] ausgedrückt.

Der Verlauf der Entladekapazitäten beider Wickelzellen zeigt einen gleichmäßigen, leichtabnehmenden Verlauf. Auch für Vollzellen mit dem auf $SO_2$-basierenden Elektrolyten und mit Elektroden mit einem planarem Ableitelement ist die Kombination von SBR- und CMC-Bindemittel sehr gut geeignet.

Experiment 5: Untersuchung der Elektrolyte 1, 3, 4 und 5

Zur Untersuchung der Elektrolyte 1, 3, 4 und 5 wurden verschiedene Experimente durchgeführt. Zum einen wurden die Deckschichtkapazitäten der Elektrolyte 1 und 3 und des Lithiumtetrachloroaluminat-Elektrolyten ermittelt und zum anderen die Entladekapazitäten in den Elektrolyten 1, 3, 4 und 5 bestimmt.

Zur Ermittlung der Deckschichtkapazität wurden drei Test-Vollen mit den in Beispiel 1 beschriebenen Elektrolyten 1 und 3 und dem Lithiumtetrachloroaluminat-Elektrolyten befüllt. Die drei Test-Vollzellen enthielten Lithiumeisenphosphat als aktives Material der positiven Elektrode.

Figur 11 zeigt das Potenzial in Volt der Test-Vollzellen beim Laden als Funktion der Kapazität, die bezogen ist auf die theoretische Kapazität der negativen Elektrode. Die zwei dargestellten Kurven zeigen gemittelte Ergebnisse jeweils mehrerer Experimente mit den vorstehend beschriebenen Test-Vollzellen. Zunächst wurden die Test-Vollzellen mit einem

Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).

Die absoluten Kapazitätsverluste liegen bei 7,58 % bzw. 11,51 % für die Elektrolyte 1 und 3 und bei 6,85 % für den Lithiumtetrachloroaluminat-Elektrolyten. Die Kapazität für die Deckschichtbildung ist bei allen Elektrolyten niedrig.

Für die Entladeexperimente wurden drei Test-Vollzellen gemäß Beispiel 2 mit den in Beispiel 1 beschriebenen Elektrolyten 1, 3, 4 und 5 befüllt. Die Test-Vollzellen hatten Lithiumnickelmangancobaltoxid (NMC) als aktives Material der positiven Elektrode. Zur Ermittlung der Entladekapazitäten (siehe Beispiel 3) wurden die Test-Vollzellen mit Stromstärke von 15 mA bis zu einer Kapazität von 125 mAh geladen. Danach erfolgte die Entladung mit einer Stromstärke von 15 mA bis zu einem Entladepotential von 2,5 Volt.

Figur 12 zeigt den Potentialverlauf während der Entladung über der entladenen Ladungsmenge in % [% der maximalen Ladung (Entladung)]. Alle Test-Vollzellen zeigen eine flache Entladekurve, die für einen guten Betrieb einer Batteriezelle notwendig ist.

Experiment 6: Bestimmung von Leitfähigkeiten der Elektrolyte 1, 3, 4 und 5

Zur Bestimmung der Leitfähigkeit wurde der Elektrolyte 1, 3, 4 und 5 mit verschiedenen Konzentrationen der Verbindungen 1, 3, 4 und 5 hergestellt. Für jede Konzentration der verschiedenen Verbindungen wurden die Leitfähigkeiten der Elektrolyten bestimmt, indem ein konduktives Messverfahren verwendet wurde. Dabei wurde nach Temperierung ein Vierelektrodensensor berührend in die Lösung gehalten und in einem Messbereich von 0,02 - 500 mS/cm gemessen.

Figur 13 zeigt die Leitfähigkeiten der Elektrolyte 1 und 4 in Abhängigkeit der Konzentration der Verbindungen 1 bzw. 4. Bei Elektrolyt 1 ist ein Maximum der Leitfähigkeit bei einer Konzentration der Verbindung 1 von 0,6 mol/L - 0,7 mol/L mit einem Wert von ca. 37,9 mS/cm zu sehen. Im Vergleich dazu haben die aus dem Stand der Technik bekannten, organischen Elektrolyten, wie z.B. LP30 (1 M LiPF6 / EC-DMC (1:1 Gew.)) eine Leitfähigkeit von nur ca. 10 mS/cm. Bei Elektrolyt 4 werden maximal 18 mS/cm bei einer Leitsalzkonzentration von 1 mol/L erreicht.

Die Figur 14 zeigt die Leitfähigkeiten der Elektrolyte 3 und 5 in Abhängigkeit der Konzentration der Verbindungen 3 bzw. 5.

Bei Elektrolyt 5 werden maximal 1,3 mS/cm bei einer Leitsalzkonzentration von 0,8 mol/L erreicht. Elektrolyt 3

zeigt seine höchste Leitfähigkeit von 0,5 mS/cm bei einer Leitsalzkonzentration von 0,6 mol/L. Obwohl die Elektrolyte 3 und 5 geringere Leitfähigkeiten zeigen, ist eine Ladung bzw. Entladung einer Test-Halbzelle, wie z.B. in den Experiment 3 beschrieben oder einer Test-Vollzelle wie in Experiment 8 beschrieben, gut möglich.

Experiment 7: Tieftemperaturverhalten

Um das Tieftemperaturverhalten des Elektrolyten 1 im Vergleich zum Lithiumtetrachloroaluminat-Elektrolyten zu bestimmen, wurden zwei Test-Vollzellen, gemäß Beispiel 2 hergestellt. Eine Test-Vollzelle wurde mit Lithiumtetrachloroaluminat-Elektrolyt der Zusammensetzung $LiAlCl_4*6SO_2$ und die andere Test-Vollzelle mit Elektrolyt 1 befüllt. Die Test-Vollzelle mit dem Lithiumtetrachloroaluminat-Elektrolyt enthielt Lithiumeisenphosphat (LEP) als aktives Material, die Testzelle mit Elektrolyt 1 enthielt Lithiumnickelmangancobaltoxid (NMC) als aktives Material der positiven Elektrode. Die Test-Vollzellen wurden bei 20°C bis 3,6 Volt (LEP) bzw. 4,4 Volt (NMC) geladen und bei der jeweiligen zu untersuchenden Temperatur bis 2,5 Volt wieder entladen. Die bei 20°C erreichte Entladekapazität wurde mit 100% bewertet. Die Temperatur zur Entladung wurde in Temperaturschritten von 10°K erniedrigt. Die erhaltene Entladekapazität wurde in % der Entladekapazität bei 20°C beschrieben. Da die Tieftemperaturentladungen nahezu unabhängig von den verwendeten aktiven Materialien der positiven und negativen Elektrode sind, können die Ergebnisse auf alle Kombinationen von aktiven Materialien übertragen werden. Tabelle 5 zeigt die Ergebnisse.

Tabelle 5: Entladekapazitäten in Abhängigkeit der Temperatur

| Temperatur | Entladekapazität des Elektrolyts 1 | Entladekapazität des Lithiumtetrachloroaluminat-Elektrolyts |
|---|---|---|
| 20°C | 100% | 100% |
| 10°C | 99% | 99% |
| 0°C | 95% | 46% |
| -10°C | 89% | 21% |
| -20°C | 82% | n/a |
| -30°C | 73% | n/a |
| -35°C | 68% | n/a |
| -40°C | 61% | n/a |

Die Test-Vollzelle mit dem Elektrolyt 1 zeigt ein sehr gutes Tieftemperaturverhalten. Bei - 20°C werden noch 82% der Kapazität erreicht, bei - 30°C noch 73%. Selbst bei einer Temperatur von -40 °C können noch 61% der Kapazität entladen werden. Im Gegensatz dazu zeigt die Test-Vollzelle mit dem Lithiumtetrachloroaluminat-Elektrolyten nur eine Entladefähigkeit bis -10°C. Dabei wird eine Kapazität von 21% erreicht. Bei tieferen Temperaturen kann die Zelle mit dem Lithiumtetrachloroaluminat-Elektrolyten nicht mehr entladen werden.

**Patentansprüche**

**1.** Wiederaufladbare Batteriezelle (20, 40, 101), enthaltend ein aktives Metall, zumindest eine positive Elektrode (23, 44) mit einem planaren Ableitelement (26), zumindest eine negative Elektrode (22, 45) mit einem planaren Ableitelement (27), ein Gehäuse (28) und einen auf $SO_2$-basierenden Elektrolyten, welcher ein erstes Leitsalz enthält,

wobei die positive (23, 44) und/oder die negative Elektrode (22, 45) mindestens ein erstes Bindemittel, welches aus einem auf monomeren Styrol- und Butadien-Struktureinheiten basierenden Polymer besteht, und mindestens ein zweites Bindemittel aus der Gruppe der Carboxymethylcellulosen enthält und
bei welcher das erste Leitsalz die Formel (I) aufweist,

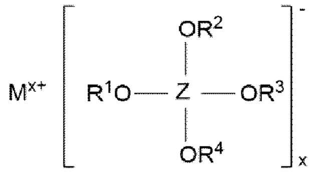

Formel (I)

wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausgewählt sind aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_{5\text{-}}C_{14}$ Heteroaryl; und
- optional zumindest einer der Substituenten $R^1$, $R^2$, $R^3$ und $R^4$ durch mindestens ein Fluoratom und/oder durch mindestens eine chemische Gruppe substituiert ist, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl; und
- wobei Z Aluminium oder Bor ist.

**2.** Wiederaufladbare Batteriezelle (20, 40, 101) nach Anspruch 1, bei welcher die positive Elektrode (23, 44) und/oder die negative Elektrode (22, 45) zumindest ein weiteres, von dem ersten und dem zweiten Bindemittel abweichendes Bindemittel enthält, wobei dieses weitere Bindemittel vorzugsweise

- ein fluoriertes Bindemittel, insbesondere ein Polyvinylidenfluorid und/oder ein Terpolymer aus Tetrafluorethylen, Hexafluorpropylen und Vinylidenfluorid, oder
- ein Polymer ist, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist.

**3.** Wiederaufladbare Batteriezelle (20, 40, 101) nach einem der vorhergehenden Ansprüche, bei welcher die Konzentration aller Bindemittel in der positiven (23, 44) oder negativen Elektrode (22, 45) vorzugsweise höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew%, weiter bevorzugt höchstens 2 Gew%, weiter bevorzugt höchstens 1 Gew% und besonders bevorzugt höchstens 0,5 Gew% bezogen auf das Gesamtgewicht der positiven (23, 44) oder negativen Elektrode (22, 45) beträgt.

**4.** Wiederaufladbare Batteriezelle (20, 40, 101) nach Anspruch 1 bis 3, bei welcher die Substituenten $R^1$, $R^2$, $R^3$ und $R^4$ des ersten Leitsalzes unabhängig voneinander ausgewählt sind aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

**5.** Wiederaufladbare Batteriezelle (20, 40, 101) nach einem der Ansprüche 1 bis 4, bei welcher zumindest einer der Substituenten $R^1$, $R^2$, $R^3$ und $R^4$ des ersten Leitsalzes eine $CF_3$-Gruppe ist.

**6.** Wiederaufladbare Batteriezelle (20, 40, 101) nach einem der Ansprüche 1 bis 4, bei welcher das erste Leitsalz ausgewählt ist aus der Gruppe, die gebildet wird von

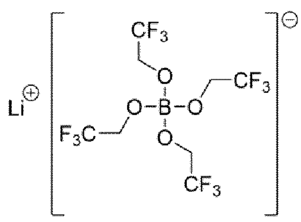

$Li[B(OCH_2CF_3)_4]$

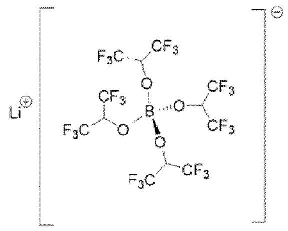

$Li[B(OCH(CF_3)_2)_4]$

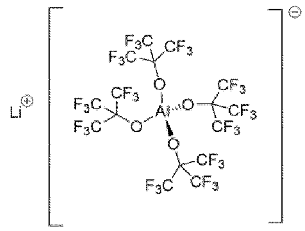

$Li[Al(OC(CF_3)_3)_4]$

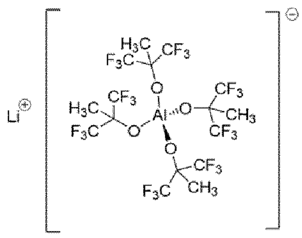

$Li[Al(OC(CH_3)(CF_3)_2)_4]$

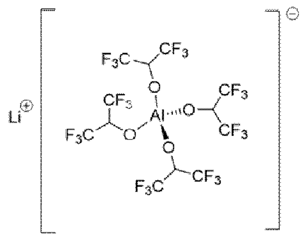

$Li[Al(OCH(CF_3)_2)_4]$

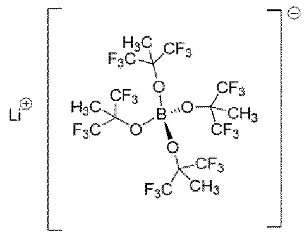

$Li [B(OC(CH_3)(CF_3)_2)_4]$

**7.** Wiederaufladbare Batteriezelle (20, 40, 101) nach einem der vorhergehenden Ansprüche, bei welcher der Elektrolyt mindestens ein zweites, von dem ersten Leitsalz abweichendes Leitsalz enthält.

**8.** Wiederaufladbare Batteriezelle (20, 40, 101) nach einem der vorhergehenden Ansprüche, bei welcher der Elektrolyt mindestens ein Additiv enthält.

**9.** Wiederaufladbare Batteriezelle (20, 40, 101) nach Anspruch 8, bei welcher das Additiv des Elektrolyten ausgewählt ist aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester, anorganischer Säuren, acyclische und cyclische Alkane, welche acyclischen und cyclischen Alkane einen Siedepunkt bei 1 bar von mindestens 36 ° C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

**10.** Wiederaufladbare Batteriezelle (20, 40, 101) nach einem der vorhergehenden Ansprüche,

bei welcher der Elektrolyt die Zusammensetzung

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,

bezogen auf das Gesamtgewicht der Elektrolytzusammensetzung aufweist.

**11.** Wiederaufladbare Batteriezelle (20, 40, 101) nach einem der vorhergehenden Ansprüche, bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

**12.** Wiederaufladbare Batteriezelle (20, 40) nach einem der vorhergehenden Ansprüche, bei welcher der Elektrolyt mindestens 0,1 Mol $SO_2$, bevorzugt mindestens 1 Mol $SO_2$, weiter bevorzugt mindestens 5

Mol $SO_2$, weiter bevorzugt mindestens 10 Mol $SO_2$ und besonders bevorzugt mindestens 20 Mol $SO_2$ je Mol Leitsalz enthält.

**13.** Wiederaufladbare Batteriezelle (20, 40, 101) nach einem der vorhergehenden Ansprüche,
bei welcher der Elektrolyt oxidationsstabil ist mindestens bis zu einem oberen Potential von 4,0 Volt, bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt.

**14.** Wiederaufladbare Batteriezelle (20, 40, 101) nach einem der vorhergehenden Ansprüche,

bei welcher das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium

ist.

**15.** Wiederaufladbare Batteriezelle (20, 40, 101) nach einem der vorhergehenden Ansprüche,

bei welcher die positive Elektrode (23, 44) als aktives Material (24) zumindest eine Verbindung enthält, die vorzugsweise die Zusammensetzung $A_xM'_yM''_zO_a$ aufweist,
worin

- A mindestens ein Metall ist, das ausgewählt ist aus der Gruppe, die gebildet wird von den Alkalimetallen, den Erdalkalimetallen, den Metallen der Gruppe 12 des Periodensystems oder Aluminium,
- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0 sind;
- z eine Zahl größer oder gleich 0 ist; und
- a eine Zahl größer 0 ist.

**16.** Wiederaufladbare Batteriezelle (20, 40, 101) nach Anspruch 15,
bei welcher die Verbindung die Zusammensetzung $Li_xNi_{y1}Mn_{y2}Co_zO_a$ aufweist, wobei x, y1 und y2 unabhängig voneinander Zahlen größer 0 sind, z eine Zahl größer oder gleich 0 ist und a eine Zahl größer 0 ist.

**17.** Wiederaufladbare Batteriezelle (20, 40, 101) nach Anspruch 15,
bei welcher die Verbindung die Zusammensetzung $A_xM'_yM''^1_{z1}M''^2_{z2}O_4$ aufweist, wobei $M''^1$ mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, $M''^2$ Phosphor ist, z eine Zahl größer oder gleich 0 ist und z2 den Wert 1 aufweist.

**18.** Wiederaufladbare Batteriezelle (20, 40, 101) nach einem der vorhergehenden Ansprüche,
bei welcher die positive Elektrode (23, 44) zumindest eine Metallverbindung enthält, die ausgewählt ist aus der Gruppe, die gebildet wird von einem Metalloxid, einem Metallhalogenid und einem Metallphosphat, wobei das Metall der Metallverbindung vorzugsweise ein Übergangsmetall der Ordnungszahlen 22 bis 28 des Periodensystems der Elemente, insbesondere Cobalt, Nickel, Mangan oder Eisen ist.

**19.** Wiederaufladbare Batteriezelle (20, 40) nach einem der vorhergehenden Ansprüche,
bei welcher die positive Elektrode (23, 44) zumindest eine Metallverbindung enthält, die die chemische Struktur eines Spinells, eines Schichtoxids, einer Umwandlungsverbindung oder einer polyanionischen Verbindung hat.

**20.** Wiederaufladbare Batteriezelle (20, 40, 101) nach einem der vorhergehenden Ansprüche,

bei welcher die negative Elektrode (22, 45) eine Insertionselektrode ist, die vorzugsweise Kohlenstoff als aktives Material, insbesondere in der Modifikation Graphit enthält.

**21.** Wiederaufladbare Batteriezelle (20, 40, 101) nach einem der vorhergehenden Ansprüche, welche zumindest eine negative Elektrode (22, 45) und zumindest eine positive Elektrode (23, 44) umfasst, die alternierend gestapelt oder gewickelt in dem Gehäuse (28) angeordnet sind, wobei die positive Elektrode (23, 44) und die negative Elektrode (22, 45) vorzugsweise jeweils durch mindestens einen Separator (21, 13) voneinander elektrisch getrennt sind.

## Claims

**1.** Rechargeable battery cell (20, 40, 101) containing an active metal, at least one positive electrode (23, 44) having a planar discharge element (26), at least one negative electrode (22, 45) having a planar discharge element (27), a housing (28) and an electrolyte based on $SO_2$which contains a first conducting salt,

wherein the positive (23, 44) and/or the negative electrode (22, 45) contain at least a first binding agent which consists of a polymer based on monomer styrene and butadiene structural units, and at least a second binding agent from the group of carboxymethylcelluloses, and
in which the first conducting salt has the formula (I)

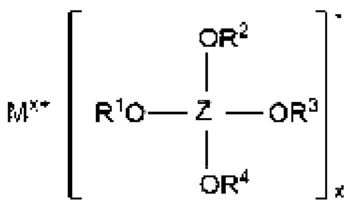

Formula (I)

wherein

- M is a metal which is selected from the group which is formed by alkali metals, earth alkali metals, metals from group 12 of the periodic table of the elements and aluminium;
- x is a whole number from 1 to 3;
- the substituents $R^1$, $R^2$, $R^3$ and $R^4$ are selected independently of each other from the group which is formed by $C_1$-$C_{10}$ alkyl, $C_2$-$C_{10}$ alkenyl, $C_2$-$C_{10}$ alkinyl, $C_3$-$C_{10}$ cycloalkyl, $C_6$-$C_{14}$ aryl and $C_5$-$C_{14}$ heteroaryl; and
- optionally at least one of the substituents $R^1$, $R^2$, $R^3$ and $R^4$ is substituted by at least one fluorine atom and/or by at least one chemical group, wherein the chemical group is selected from the group which is formed by $C_1$-$C_4$ alkyl, $C_2$-$C_4$ alkenyl, $C_2$-$C_4$ alkinyl, phenyl and benzyl; and
- wherein Z is aluminum or boron.

**2.** Rechargeable battery cell (20, 40, 101) according to claim 1, in which the positive electrode (23, 44) and/or the negative electrode (22, 45) contains at least one additional binding agent which differs from the first and second binding agent, wherein this additional binding agent is preferably

- a fluorinated binding agent, in particular a polyvinylidene fluoride and/or a terpolymer of tetrafluoroethylene, hexafluoropropylene and vinylidene fluoride, or
- a polymer which is constructed from monomer structural units of a conjugated carboxylic acid or from the alkali, earth alkali or ammonium salt of this conjugated carboxylic acid or from a combination thereof.

**3.** Rechargeable battery cell (20, 40, 101) according to any one of the preceding claims, in which the concentration of all binding agents in the positive (23, 44) or negative electrode (22, 45) is preferably a maximum of 20 % by weight, further preferably a maximum of 15 % by weight, further preferably a maximum of 10 % by weight, further preferably a maximum of 7 % by weight, further preferably a maximum of 5 % by weight, further preferably a maximum of 2 % by weight, further preferably a maximum of 1% by weight and most preferably a maximum of 0.5 % by weight based on the overall weight of the positive (23, 44) or negative electrode (22, 45).

**4.** Rechargeable battery cell (20, 40, 101) according to claim 1 to 3, in which the substituents $R^1$, $R^2$, $R^3$ and $R^4$ of the first conducting salt are selected independently of each other from the group which is formed by

- $C_1$-$C_6$ alkyl; preferably $C_2$-$C_4$ alkyl; most preferably from the alkyl groups 2-propyl, methyl and ethyl;
- $C_2$-$C_6$ alkenyl; preferably $C_2$-$C_4$ alkenyl; most preferably from the alkenyl groups ethenyl and propenyl;
- $C_2$-$C_6$ alkinyl; preferably $C_2$-$C_4$alkinyl;
- $C_3$-$C_6$ cycloalkyl;
- phenyl; and
- $C_5$-$C_7$ heteroaryl.

**5.** Rechargeable battery cell (20, 40, 101) according to any one of claims 1 to 4, in which at least one of the substituents $R^1$, $R^2$, $R^3$ and $R^4$ of the conducting salt is a $CF_3$ group.

**6.** Rechargeable battery cell (20, 40, 101) according to any one of claims 1 to 4, in which the first conducting salt is selected from the group which is formed by

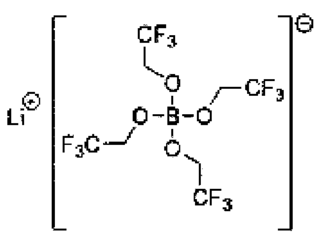
$Li[B(OCH_2CF_3)_4]$

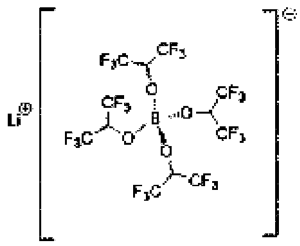
$Li[B(OCH(CF_3)_2)_4]$

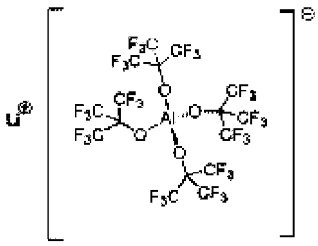
$Li[Al(OC(CF_3)_3)_4]$

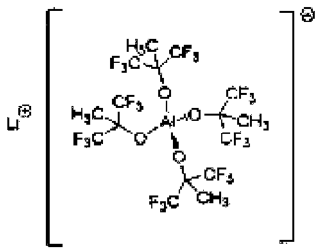
$Li[Al(OC(CH_3)(CF_3)_2)_4]$

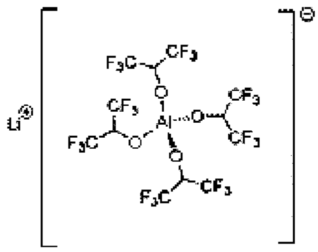
$Li[Al(OCH(CF_3)_2)_4]$

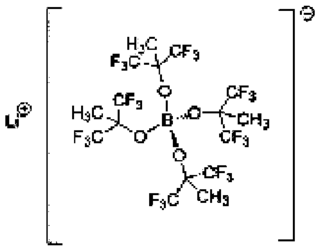
$Li [B(OC(CH_3)(CF_3)_2)_4]$

**7.** Rechargeable battery cell (20, 40, 101) according to any one of the preceding claims, in which the electrolyte contains at least a second conducting salt which differs from the first conducting salt.

**8.** Rechargeable battery cell (20, 40, 101) according to any one of the preceding claims, in which the electrolyte contains at least one additive.

**9.** Rechargeable battery cell (20, 40, 101) according to claim 8, in which the additive of the electrolyte is selected from the group which is formed by vinylene carbonate and the derivatives thereof, vinylethylene carbonate and the derivatives thereof, methyl ethylene carbonate and the derivatives thereof, lithium(bis oxalato)borate, lithium difluoro(oxalato)borate, lithium tetrafluoro(oxalato)phosphate, lithium oxalate, 2-vinylpyridine, 4-vinylpyridine, cyclical exomethylene carbonate, sultones, cyclical and acyclical sulfonates, acyclical sulphites, cyclical and acyclical sulfinates, organic esters, inorganic acids acyclical and cyclical alkanes, which acyclical and cyclical alkanes have a boiling point at 1 bar of at least 36° C, aromatic compounds, halogenated cyclical and acyclical sulfonylimides, halogenated cyclical and acyclical phosphate esters, halogenated cyclical and acyclical phosphines, halogenated cyclical and acyclical phosphites, halogenated cyclical and acyclical phosphazenes, halogenated cyclical and acyclical silylamines, halogenated cyclical and acyclical halogenated esters, halogenated cyclical and acyclical amides, halogenated cyclical and acyclical anhydrides and halogenated organic heterocyclenes.

**10.** Rechargeable battery cell (20, 40, 101) according to any one of the preceding claims,

in which the electrolyte has the composition

(i) 5 to 99.4 % by weight sulphur dioxide,
(ii) 0.6 to 95 % by weight of the first conducting salt,
(iii) 0 to 25 % by weight of the second conducting salt and
(iv) 0 to 10 % by weight of the additive,

based on the total weight of the electrolyte composition.

**11.** Rechargeable battery cell (20, 40, 101) according to any one of the preceding claims, in which the material quantity concentration of the first conducting salt is in the range from 0.01 mol/l to 10 mol/l, preferably from 0.05 mol/l to 10 mol/l, further preferably from 0.1 mol/l to 6 mol/l and most preferably from 0.2 mol/l to 3.5 mol/l based on the total volume of the electrolyte.

**12.** Rechargeable battery cell (20, 40) according to any one of the preceding claims, in which the electrolyte contains at least 0.1 mol $SO_2$, preferably at least 1 mol $SO_2$, further preferably at least 5 mol $SO_2$, further preferably at least 10 mol $SO_2$ and most preferably at least 20 mol $SO_2$ per mol of conducting salt.

**13.** Rechargeable battery cell (20, 40, 101) according to any one of the preceding claims, in which the electrolyte is oxidation stable at least up to an upper potential of 4.0 Volt, preferably at least up to an upper potential of 4.2 Volt, further preferably at least up to an upper potential of 4.4 Volt, further preferably at least up to an upper potential of 4.6 Volt, further preferably at least up to an upper potential of 4.8 Volt and most preferably at least up to an upper potential of 5.0 Volt.

**14.** Rechargeable battery cell (20, 40, 101) according to any one of the preceding claims, in which the active metal is

- an alkali metal, in particular lithium or sodium;
- an earth alkali metal, in particular calcium;
- a metal of group 12 of the periodic table, in particular zinc; or
- aluminium

**15.** Rechargeable battery cell (20, 40, 101) according to any one of the preceding claims, in which the positive electrode (23, 44) contains as an active material (24) at least one compound which preferably has the composition $A_xM'_yM''_zO_a$, wherein

- A is at least one metal which is selected from the group which is formed by the alkali metals, the earth alkali metals, the metals of group 12 of the periodic table or aluminum,
- M' is at least one metal which is selected from the group which is formed by the elements Ti, V, Cr, Mn, Fe, Co, Ni, Cu and Zn;
- M" is at least one element which is selected from the group which is formed by the elements of groups 2, 3, 4, 5, 6, 7, 8, 9, 10, 11, 12, 13, 14, 15 and 16 of the periodic table of the elements;
- x and y are numbers greater than 0 independently of each other;
- z is a number greater than or equal to 0; and
- a is a number greater than 0.

**16.** Rechargeable battery cell (20, 40, 101) according to claim 15, in which the compound has the composition $Li_xNi_{y1}Mn_{y2}Co_zO_a$, wherein x, y1 and y2 are numbers greater than 0 independently of each other, z is a number greater than or equal to 0 and a is a number greater than 0.

**17.** Rechargeable battery cell (20, 40, 101) according to claim 15, in which the compound has the composition $A_xM'_yM''^1_{z1}M''^2_{z2}O_4$, wherein $M''^1$ is at least one element which is selected from the group which is formed by the elements of the groups 2, 3, 4, 5, 6, 7, 8, 9, 10, 11, 12, 13, 14, 15 and 16 of the periodic table of the elements, $M''^2$ is phosphorus, z is a number greater than or equal to 0 and z2 has the value 1.

**18.** Rechargeable battery cell (20, 40, 101) according to any one of the preceding claims,

in which the positive electrode (23, 44) contains at least one metal compound which is selected from the group which is formed by a metal oxide, a metal halide and a metal phosphate, wherein the metal of the metal compound is preferably a transition metal with the atomic numbers 22 to 28 of the periodic table of elements, in particular cobalt, nickel, manganese or iron.

**19.** Rechargeable battery cell (20, 40) according to any one of the preceding claims,
in which the positive electrode (23, 44) contains at least one metal compound which has the chemical structure of a spinel, a layered oxide, a conversion compound or a polyanionic compound.

**20.** Rechargeable battery cell (20, 40, 101) according to any one of the preceding claims,
in which the negative electrode (22, 45) is an insertion electrode which preferably contains carbon as an active material, in particular in the modification graphite.

**21.** Rechargeable battery cell (20, 40, 101) according to any one of the preceding claims,
which comprises at least one negative electrode (22, 45) and at least one positive electrode (23, 44), which are arranged in an alternating stacked state or wound in the housing (28), wherein the positive electrode (23, 44) and the negative electrode (22, 45) are preferably electrically separated from each other in each case by at least one separator (21, 13).

**Revendications**

**1.** Cellule de batterie rechargeable (20, 40, 101), contenant un métal actif, au moins une électrode positive (23, 44) avec un élément de dérivation (26) plan, au moins une électrode négative (22, 45) avec un élément de dérivation plan (27), un boîtier (28) et un électrolyte à base de $SO_2$qui contient un premier sel conducteur,

dans laquelle l'électrode positive (23, 44) et/ou négative (22, 45) contient au moins un premier liant qui se compose d'un polymère se basant sur des unités de structure de styrène et butadiène monomères, et au moins un second liant du groupe des carboxyméthylcelluloses et
pour laquelle le premier sel conducteur présente la formule (I),

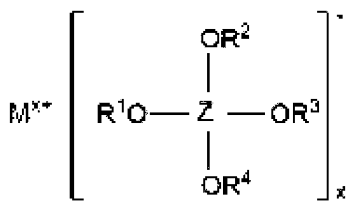

Formule (I)

dans laquelle

- M est un métal qui est sélectionné parmi le groupe qui est formé par les métaux alcalins, métaux alcalino-terreux, métaux du groupe 12 du tableau périodique des éléments et l'aluminium ;
- x est un nombre entier de 1 à 3 ;
- les substituants $R^1$, $R^2$, $R^3$ et $R^4$ sont sélectionnés indépendamment les uns des autres parmi le groupe qui est formé par alkyle en $C_1$-$C_{10}$, alcényle en $C_2$-$C_{10}$, alcynyle en $C_2$-$C_{10}$, cycloalkyle en $C_3$-$C_{10}$, aryle en $C_6$-$C_{14}$ et hétéroaryle en $C_5$-$C_{14}$ ; et
- en option au moins l'un des substituants $R^1$, $R^2$, $R^3$ et $R^4$ est substitué par au moins un atome de fluor et/ou par au moins un groupe chimique, dans laquelle le groupe chimique est sélectionné parmi le groupe qui est formé par alkyle en $C_1$-$C_4$, alcényle en $C_2$-$C_4$, alcynyle en $C_2$-$C_4$, phényle et benzyle ; et
- dans laquelle Z est l'aluminium ou le bore.

**2.** Cellule de batterie rechargeable (20, 40, 101) selon la revendication 1,
pour laquelle l'électrode positive (23, 44) et/ou l'électrode négative (22, 45) contient au moins un autre liant différent du premier et du second liant, dans laquelle cet autre liant de préférence

- est un liant fluoré, en particulier un fluorure de polyvinylidène et/ou un terpolymère de tétrafluoroéthylène, d'hexafluoropropylène et fluorure de vinylidène ou
- un polymère qui est constitué d'unités de structure monomères d'un acide carboxylique conjugué ou d'un sel alcalin, alcalino-terreux ou d'ammonium de cet acide carboxylique conjugué ou d'une combinaison de ceux-ci.

**3.** Cellule de batterie rechargeable (20, 40, 101) selon l'une quelconque des revendications précédentes, pour laquelle la concentration de tous les liants dans l'électrode positive (23, 44) ou négative (22, 45) s'élève de préférence au plus à 20 % en poids, plus préférentiellement au plus à 15 % en poids, plus préférentiellement au plus à 10 % en poids, plus préférentiellement au plus à 7 % en poids, plus préférentiellement au plus à 5 % en poids, plus préférentiellement au plus à 2 % en poids, plus préférentiellement au plus à 1 % en poids et le plus préférentiellement au plus à 0,5 % en poids par rapport au poids total de l'électrode positive (23, 44) ou négative (22, 45).

**4.** Cellule de batterie rechargeable (20, 40, 101) selon la revendication 1 à 3, pour laquelle les substituants $R^1$, $R^2$, $R^3$ et $R^4$ du premier sel conducteur sont sélectionnés indépendamment les uns des autres parmi le groupe qui est formé par

- alkyle en $C_1$-$C_6$ ; de préférence par alkyle en $C_2$-$C_4$ ; le plus préférentiellement par les groupes alkyles 2-propyle, méthyle et éthyle ;
- alcényle en $C_2$-$C_6$ ; de préférence par alcényle en $C_2$-$C_4$ ; le plus préférentiellement par les groupes alcényles éthényle et propényle ;
- alcynyle en $C_2$-$C_6$ ; de préférence alcynyle en $C_2$-$C_4$ ;
- cycloalkyle en $C_3$-$C_6$ ;
- phényle ; et
- hétéroaryle en $C_5$-$C_7$.

**5.** Cellule de batterie rechargeable (20, 40, 101) selon l'une quelconque des revendications 1 à 4, pour laquelle au moins l'un des substituants $R^1$, $R^2$, $R^3$ et $R^4$ du premier sel conducteur est un groupe $CF_3$.

**6.** Cellule de batterie rechargeable (20, 40, 101) selon l'une quelconque des revendications 1 à 4, pour laquelle le premier sel conducteur est sélectionné parmi le groupe qui est formé par

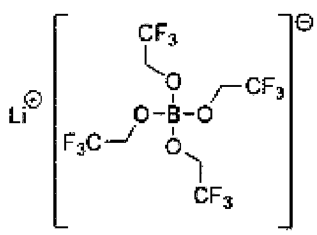

$Li[B(OCH_2CF_3)_4]$

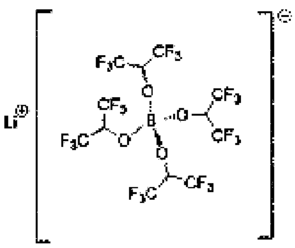

$Li[B(OCH(CF_3)_2)_4]$

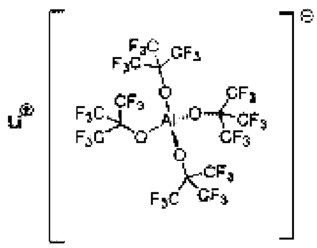

$Li[Al(OC(CF_3)_3)_4]$

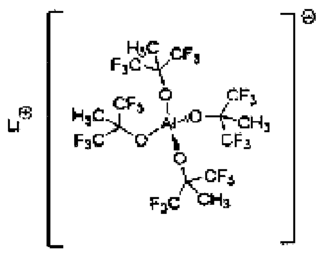

$Li[Al(OC(CH_3)(CF_3)_2)_4]$

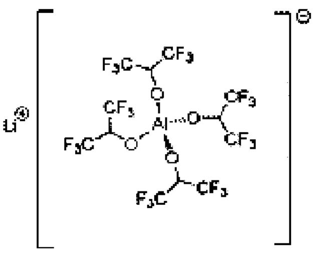

$Li[Al(OCH(CF_3)_2)_4]$

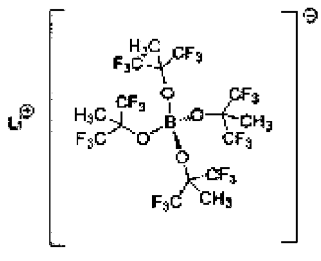

$Li\ [B(OC(CH_3)(CF_3)_2)_4]$

**7.** Cellule de batterie rechargeable (20, 40, 101) selon l'une quelconque des revendications précédentes, pour laquelle l'électrolyte contient au moins un second sel conducteur différent du premier sel conducteur.

**8.** Cellule de batterie rechargeable (20, 40, 101) selon l'une quelconque des revendications précédentes, pour laquelle l'électrolyte contient au moins un additif.

**9.** Cellule de batterie rechargeable (20, 40, 101) selon la revendication 8, pour laquelle l'additif de l'électrolyte est sélectionné parmi le groupe qui est formé par du carbonate de vinylène et ses dérivés, du carbonate de vinyléthylène et ses dérivés, du carbonate de méthyléthylène et ses dérivés, du bisoxalatoborate de lithium, du difluoro(oxalato)borate de lithium, du tétrafluoro(oxalato)phosphate de lithium, de l'oxalate de lithium, du 2-vinylpyridine, du 4-vinylpyridine, des carbonates d'exométhylène cycliques, des sultones, des sulfonates cycliques et acycliques, des sulfites acycliques, des sulfinates cycliques et acycliques, des esters organiques, des acides anorganiques, des alcanes acycliques et cycliques, lesquels alcanes acycliques et cycliques présentent un point d'ébullition à 1 bar d'au moins 36 °C, des composés aromatiques, des sulfonylimides halogénés cycliques et acycliques, des esters phosphoriques halogénés cycliques et acycliques, des phosphines halogénées cycliques et acycliques, des phosphites halogénées cycliques et acycliques, des phosphazènes halogénés cycliques et acycliques, des amines silyliques halogénées cycliques et acycliques, des esters halogénés cycliques et halogénés acycliques, des amides halogénés cycliques et acycliques, des anhydrides halogénés cycliques et acycliques et des hétérocycles organiques halogénés.

**10.** Cellule de batterie rechargeable (20, 40, 101) selon l'une quelconque des revendications précédentes,

pour laquelle l'électrolyte présente la composition de

(i) 5 à 99,4 % en poids de dioxyde de soufre,
(ii) 0,6 à 95 % en poids du premier sel conducteur,
(iii) 0 à 25 % en poids du second sel conducteur et
(iv) 0 à 10 % en poids de l'additif,

par rapport au poids total de la composition d'électrolyte.

**11.** Cellule de batterie rechargeable (20, 40, 101) selon l'une quelconque des revendications précédentes, pour laquelle la concentration molaire du premier sel conducteur est dans la plage de 0,01 mol/l à 10 mol/l, de préférence de 0,05 mol/l à 10 mol/l, plus préférentiellement de 0,1 mol/l à 6 mol/l et le plus préférentiellement de 0,2 mol/l à 3,5mol/l par rapport au volume total de l'électrolyte.

**12.** Cellule de batterie rechargeable (20, 40) selon l'une quelconque des revendications précédentes, pour laquelle l'électrolyte contient au moins 0,1 mole de $SO_2$, de préférence au moins 1 mole de $SO_2$, plus préférentiellement au moins 5 moles de $SO_2$, plus préférentiellement au moins 10 moles de $SO_2$ et le plus préférentiellement au moins 20 moles de $SO_2$ par mole de sel conducteur.

**13.** Cellule de batterie rechargeable (20, 40, 101) selon l'une quelconque des revendications précédentes, pour laquelle l'électrolyte est stable à l'oxydation au moins jusqu'à un potentiel supérieur de 4,0 volts, de préférence au moins jusqu'à un potentiel supérieur de 4,2 volts, plus préférentiellement au moins jusqu'à un potentiel supérieur de 4,4 volts, plus préférentiellement au moins jusqu'à un potentiel supérieur de 4,6 volts, plus préférentiellement au moins jusqu'à un potentiel supérieur de 4,8 volts et le plus préférentiellement au moins jusqu'à un potentiel supérieur de 5,0 volts.

**14.** Cellule de batterie rechargeable (20, 40, 101) selon l'une quelconque des revendications précédentes, pour laquelle le métal actif est

- un métal alcalin, en particulier du lithium ou du sodium ;
- un métal alcalino-terreux, en particulier du calcium ;
- un métal du groupe 12 du tableau périodique, en particulier du zinc ; ou
- l'aluminium

**15.** Cellule de batterie rechargeable (20, 40, 101) selon l'une quelconque des revendications précédentes, pour laquelle l'électrode positive (23, 44) contient en tant que matériau actif (24) au moins un composé qui présente de préférence la composition $A_xM'_yM''_zO_a$, dans laquelle

- A est au moins un métal qui est sélectionné parmi le groupe qui est formé par les métaux alcalins, les métaux alcalino-terreux, les métaux du groupe 12 du tableau périodique ou l'aluminium,
- M' est au moins un métal qui est sélectionné parmi le groupe qui est formé par les éléments Ti, V, Cr, Mn, Fe, Co, Ni, Cu et Zn ;

- M" est au moins un élément qui est sélectionné parmi le groupe qui est formé par les éléments des groupes 2, 3, 4, 5, 6, 7, 8, 9, 10, 11, 12, 13, 14, 15 et 16 du tableau périodique des éléments ;
- x et y sont indépendamment l'un de l'autre des nombres supérieurs à 0 ;
- z est un nombre supérieur ou égal à 0 ; et
- a est un nombre supérieur à 0.

**16.** Cellule de batterie rechargeable (20, 40, 101) selon la revendication 15, pour laquelle le composé présente la composition $Li_xNi_{y1}Mn_{y2}Co_2O_a$, dans laquelle x, y1 et y2 sont indépendamment les uns des autres des nombres supérieurs à 0, z est un nombre supérieur ou égal à 0 et a est un nombre supérieur à 0.

**17.** Cellule de batterie rechargeable (20, 40, 101) selon la revendication 15, pour laquelle le composé présente la composition $A_xM'_yM''^1_{z1}M''^2_{z2}O_4$, dans laquelle $M''^1$ est au moins un élément qui est sélectionné parmi le groupe qui est formé par les éléments des groupes 2, 3, 4, 5, 6, 7, 8, 9, 10, 11, 12, 13, 14, 15 et 16 du tableau périodique des éléments, $M''^2$ est du phosphore, z est un nombre supérieur ou égal à 0 et z2 présente la valeur 1.

**18.** Cellule de batterie rechargeable (20, 40, 101) selon l'une quelconque des revendications précédentes, pour laquelle l'électrode positive (23, 44) contient au moins un composé métallique qui est sélectionné parmi le groupe qui est formé par un oxyde métallique, un halogénure métallique et un phosphate métallique, dans laquelle le métal du composé métallique est de préférence un métal de transition des numéros atomiques 22 à 28 du tableau périodique des éléments, en particulier cobalt, nickel, manganèse ou fer.

**19.** Cellule de batterie rechargeable (20, 40) selon l'une quelconque des revendications précédentes, pour laquelle l'électrode positive (23, 44) contient au moins un composé métallique qui présente la structure chimique d'un spinelle, d'un oxyde stratifié, d'un composé de transformation ou d'un composé polyanionique.

**20.** Cellule de batterie rechargeable (20, 40, 101) selon l'une quelconque des revendications précédentes, pour laquelle l'électrode négative (22, 45) est une électrode d'insertion qui contient de préférence du carbone en tant que matériau actif, en particulier dans la modification du graphite.

**21.** Cellule de batterie rechargeable (20, 40, 101) selon l'une quelconque des revendications précédentes, qui comprend au moins une électrode négative (22, 45) et au moins une électrode positive (23, 44) qui sont agencées en alternance empilées ou enroulées dans le boîtier (28), dans laquelle l'électrode positive (23, 44) et l'électrode négative (22, 45) sont séparées électriquement l'une de l'autre de préférence respectivement par au moins un séparateur (21, 13).

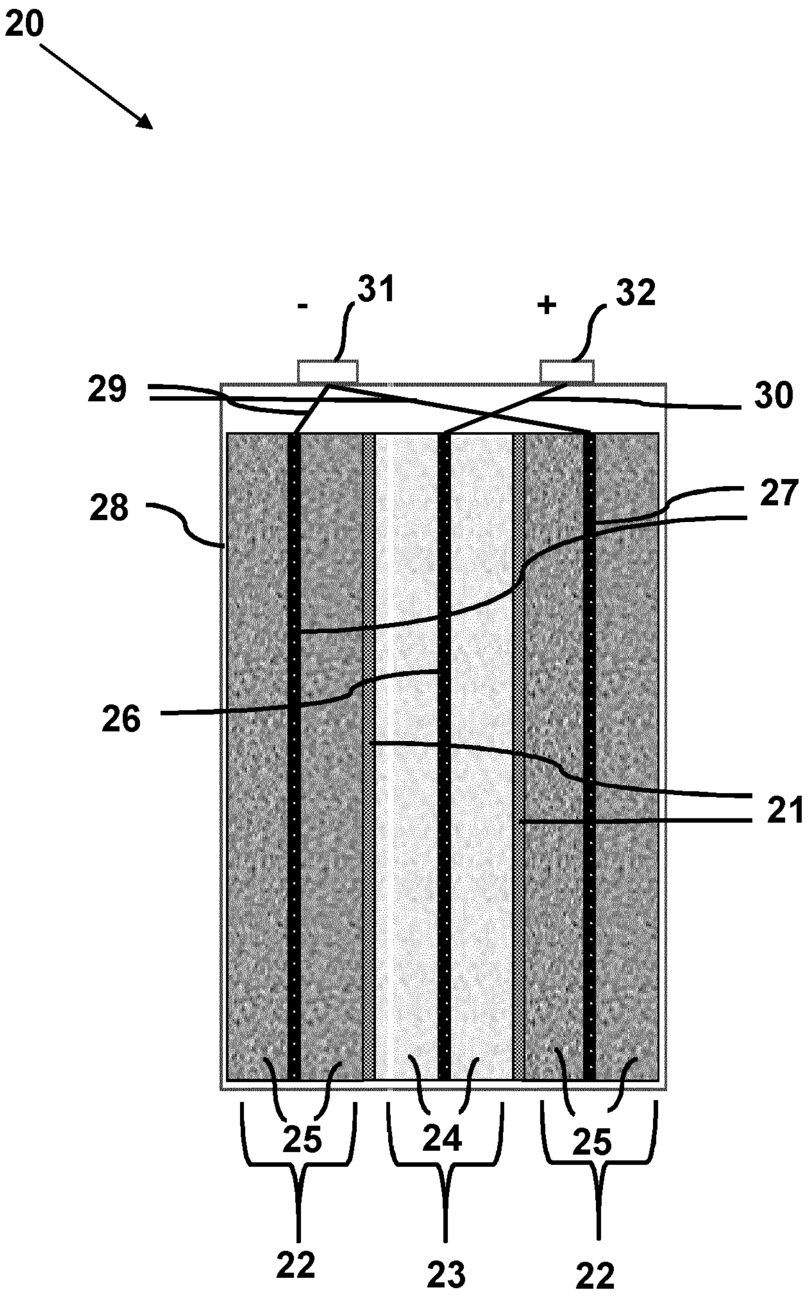


FIG. 1

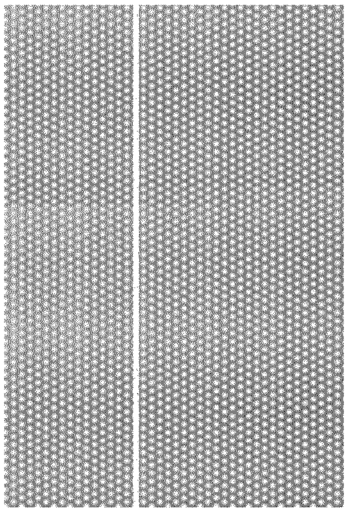

FIG. 2

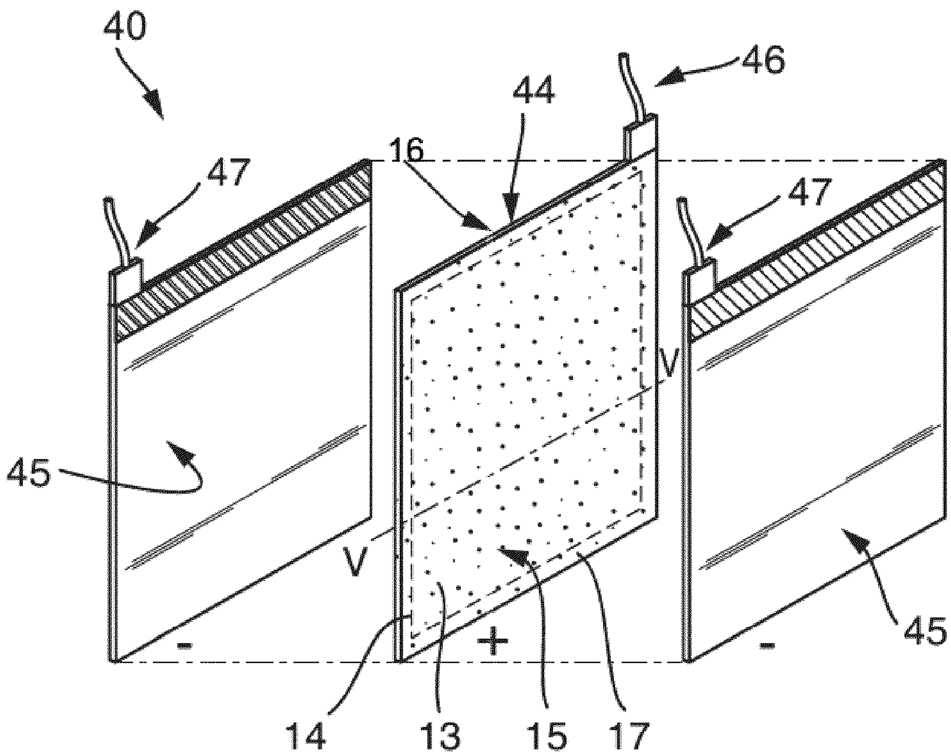


FIG. 3

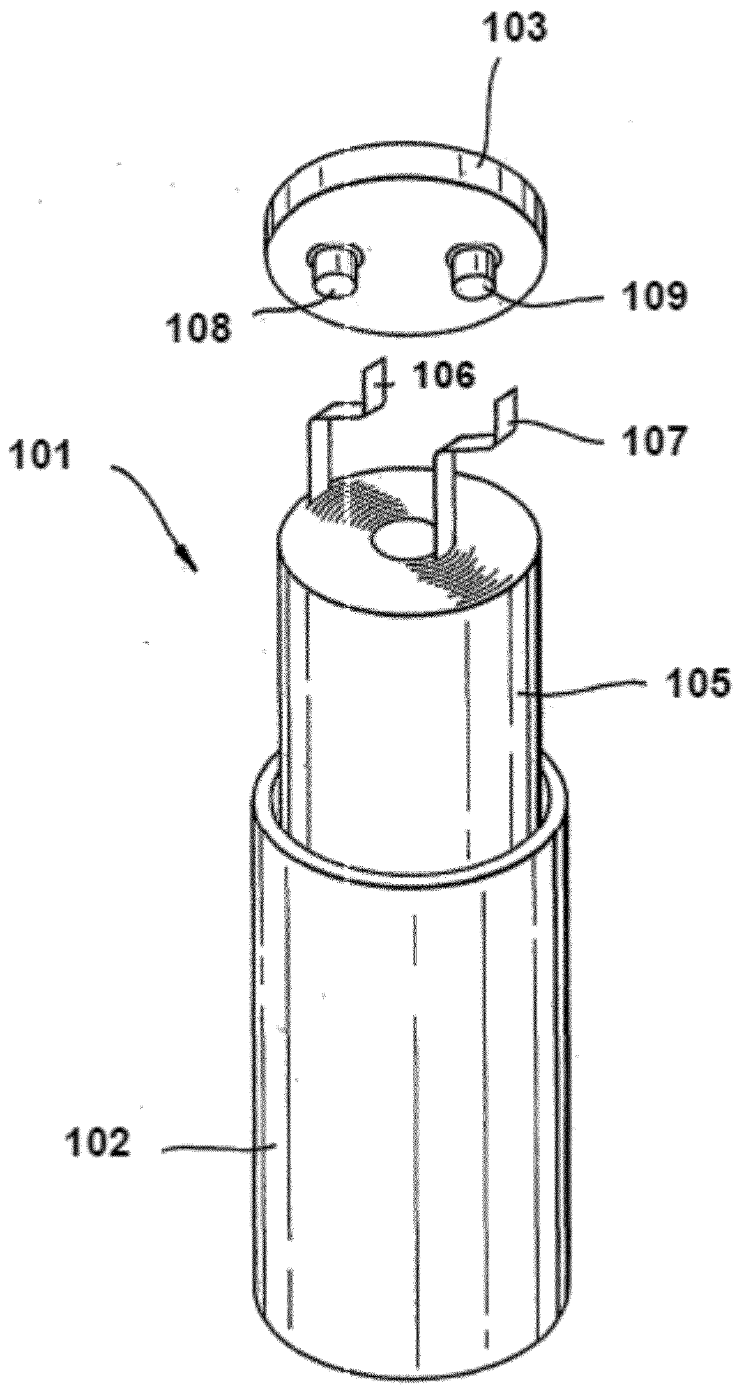


FIG. 4

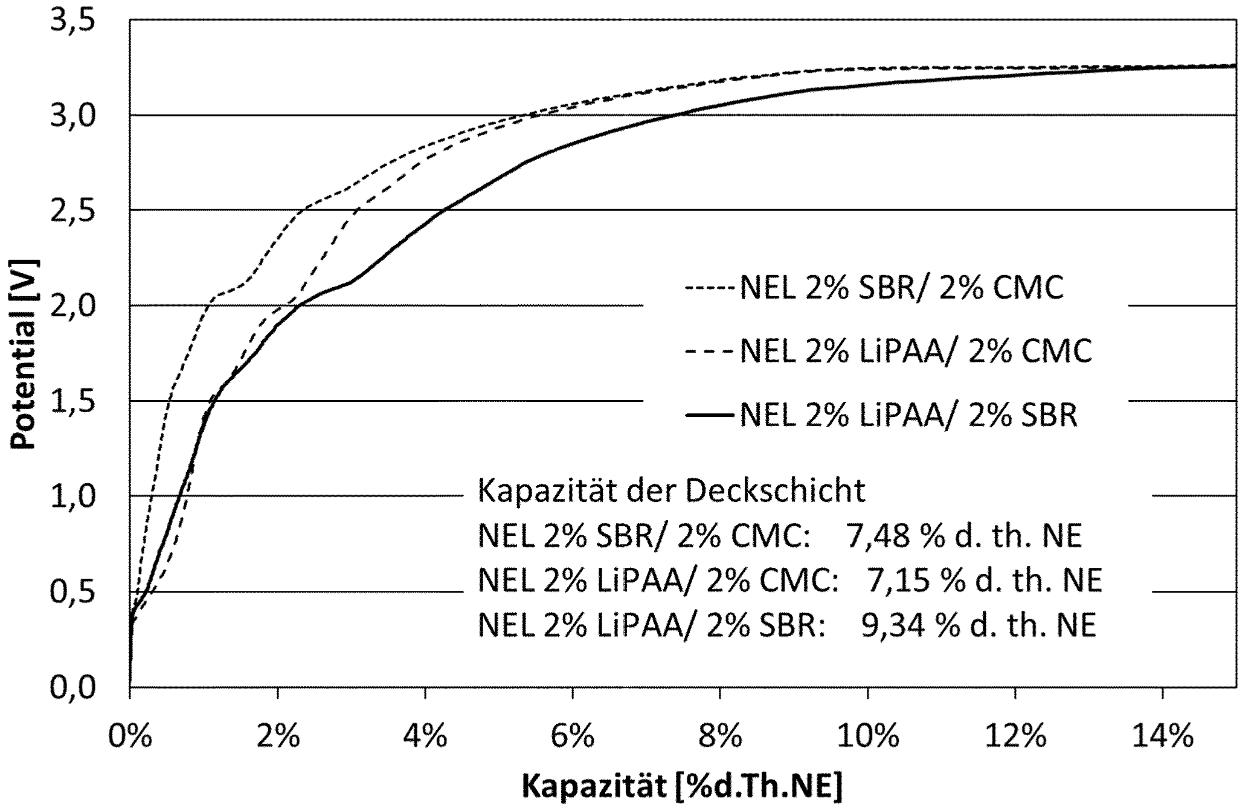
3,5
3,0
2,5
2,0
1,5
1,0
0,5
0,0
Potential [V]
0%
2%
4%
6%
8%
10%
12%
14%
Kapazität [%d.Th.NE]
NEL 2% SBR/ 2% CMC
NEL 2% LiPAA/ 2% CMC
NEL 2% LiPAA/ 2% SBR
Kapazität der Deckschicht
NEL 2% SBR/ 2% CMC: 7,48 % d. th. NE
NEL 2% LiPAA/ 2% CMC: 7,15 % d. th. NE
NEL 2% LiPAA/ 2% SBR: 9,34 % d. th. NE

FIG. 5

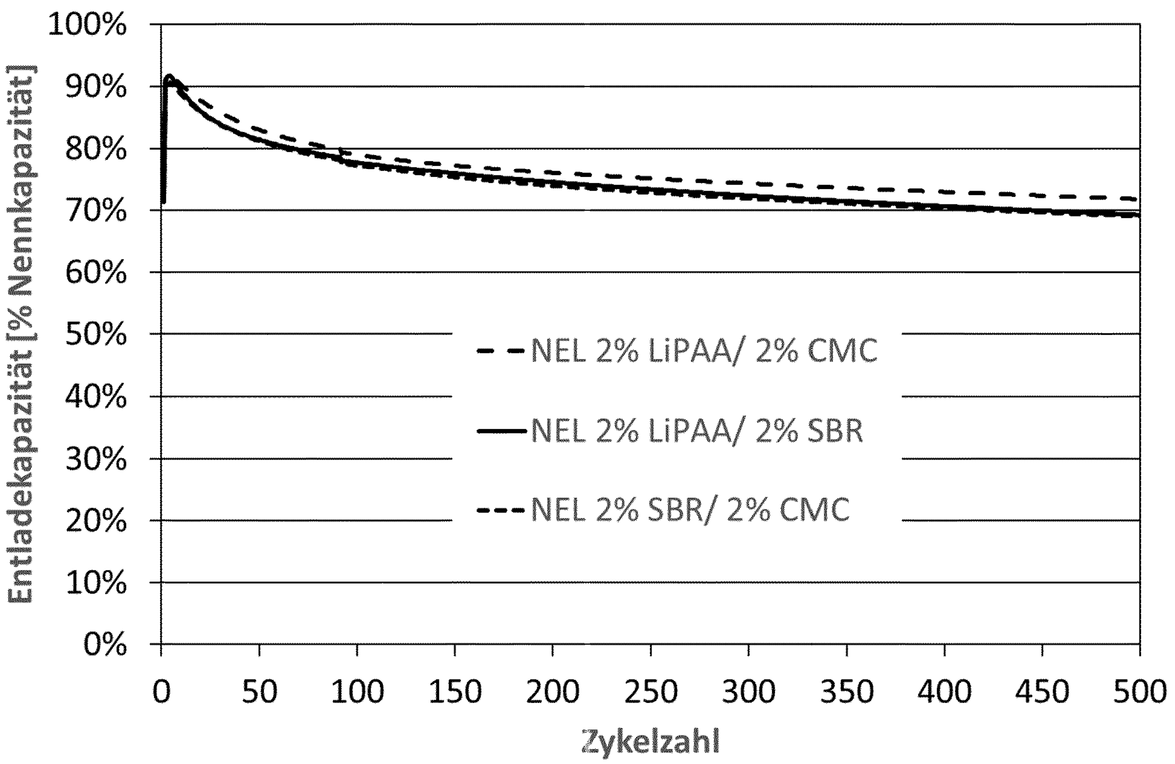
100%
90%
80%
70%
60%
50%
40%
30%
20%
10%
0%
Entladekapazität [% Nennkapazität]
0
50
100
150
200
250
300
350
400
450
500
Zykelzahl
NEL 2% LiPAA/ 2% CMC
NEL 2% LiPAA/ 2% SBR
NEL 2% SBR/ 2% CMC

FIG. 6

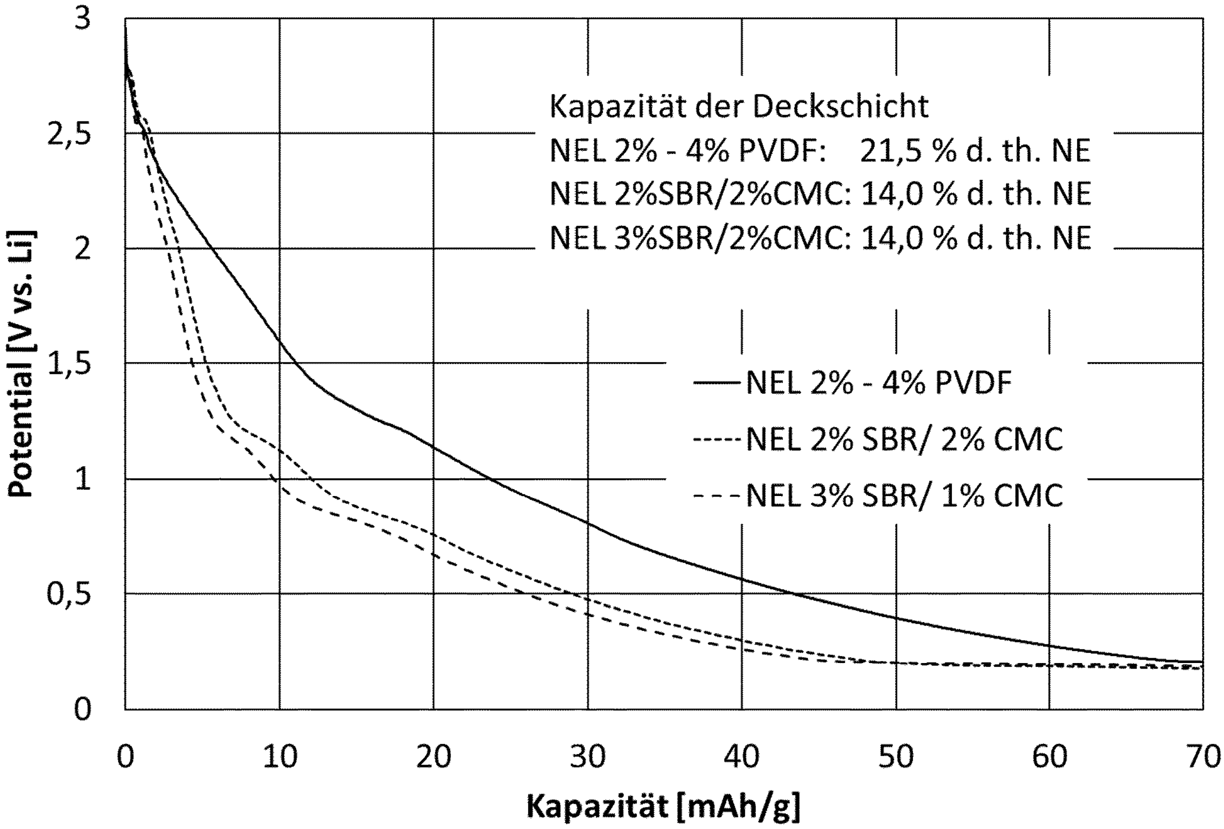
Kapazität der Deckschicht
NEL 2% - 4% PVDF: 21,5 % d. th. NE
NEL 2%SBR/2%CMC: 14,0 % d. th. NE
NEL 3%SBR/2%CMC: 14,0 % d. th. NE
NEL 2% - 4% PVDF
NEL 2% SBR/ 2% CMC
NEL 3% SBR/ 1% CMC
Potential [V vs. Li]
3
2,5
2
1,5
1
0,5
0
0
10
20
30
40
50
60
70
Kapazität [mAh/g]

FIG. 7

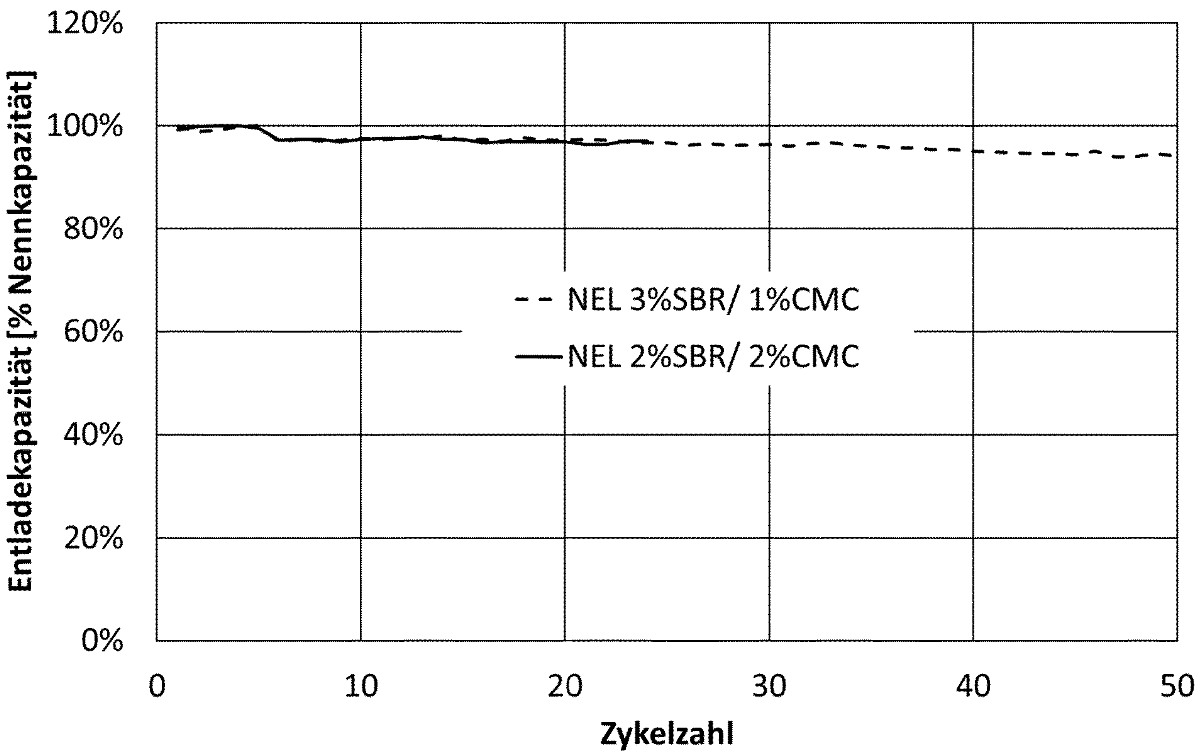
NEL 3%SBR/ 1%CMC
NEL 2%SBR/ 2%CMC
Entladekapazität [% Nennkapazität]
120%
100%
80%
60%
40%
20%
0%
0
10
20
30
40
50
Zykelzahl

FIG. 8

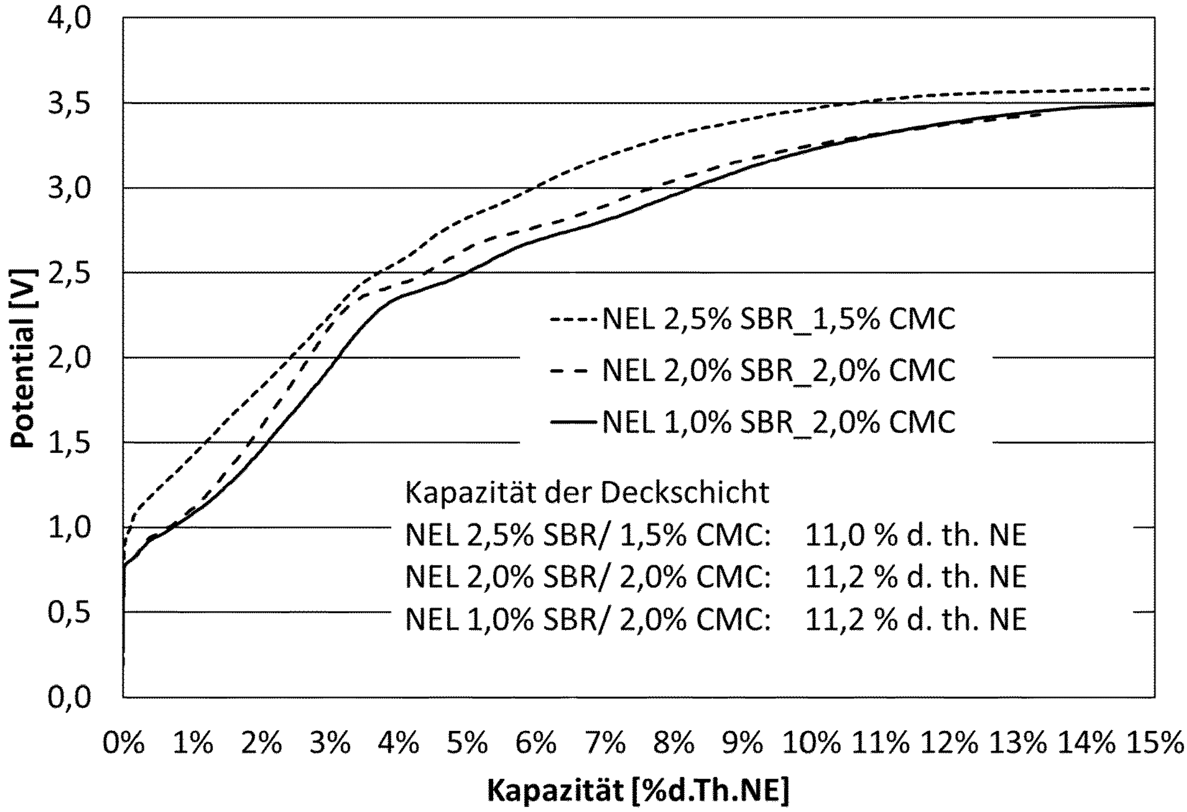
4,0
3,5
3,0
2,5
2,0
1,5
1,0
0,5
0,0
Potential [V]
----NEL 2,5% SBR_1,5% CMC
- - NEL 2,0% SBR_2,0% CMC
—NEL 1,0% SBR_2,0% CMC
Kapazität der Deckschicht
NEL 2,5% SBR/ 1,5% CMC: 11,0 % d. th. NE
NEL 2,0% SBR/ 2,0% CMC: 11,2 % d. th. NE
NEL 1,0% SBR/ 2,0% CMC: 11,2 % d. th. NE
0% 1% 2% 3% 4% 5% 6% 7% 8% 9% 10% 11% 12% 13% 14% 15%
Kapazität [%d.Th.NE]

FIG. 9

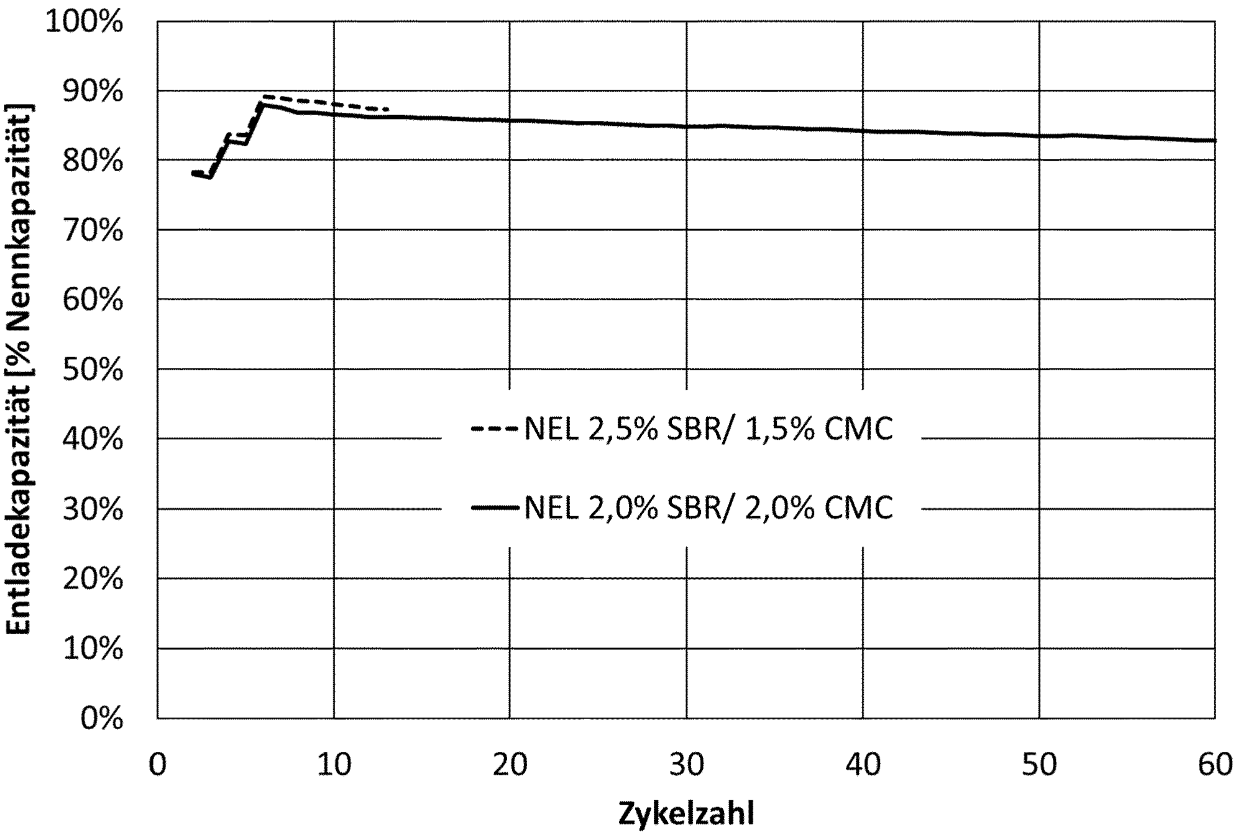
100%
90%
80%
70%
60%
50%
40%
30%
20%
10%
0%
Entladekapazität [% Nennkapazität]
---NEL 2,5% SBR/ 1,5% CMC
—NEL 2,0% SBR/ 2,0% CMC
0 10 20 30 40 50 60
Zykelzahl

FIG. 10

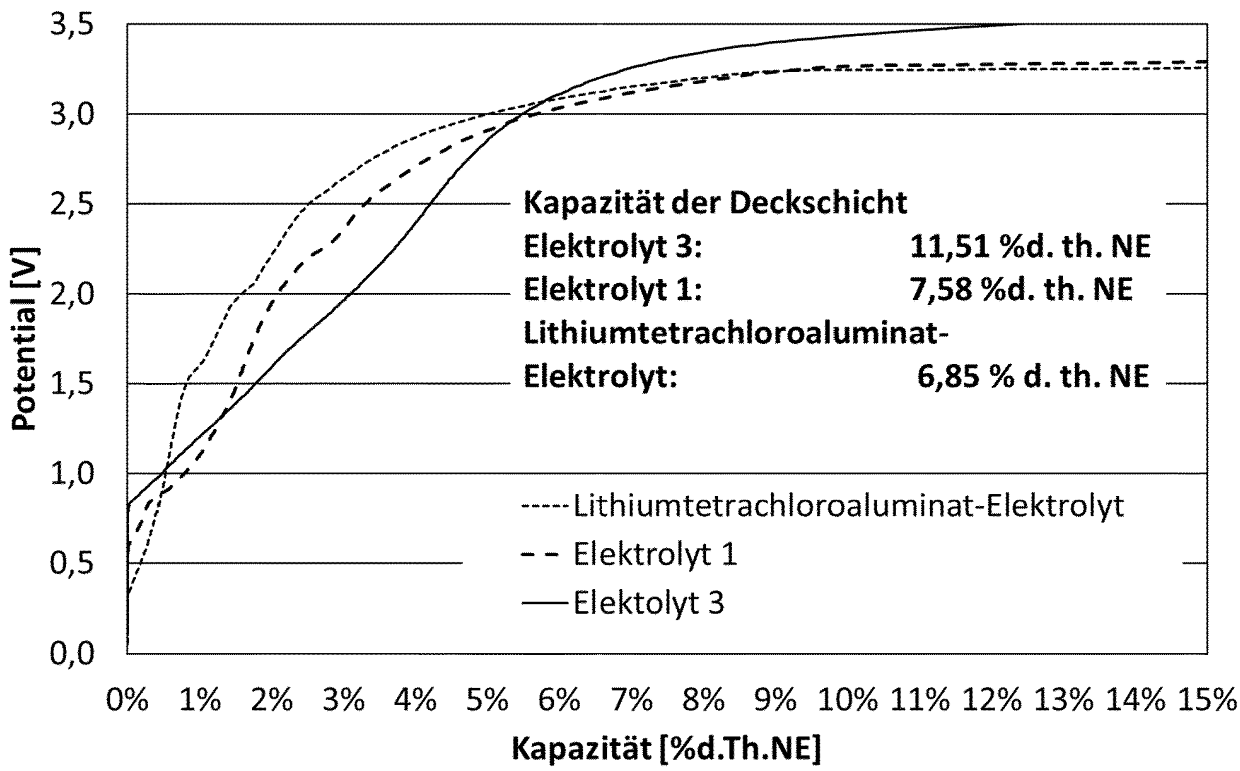
3,5
3,0
2,5
2,0
1,5
1,0
0,5
0,0
Potential [V]
Kapazität der Deckschicht
Elektrolyt 3: 11,51 %d. th. NE
Elektrolyt 1: 7,58 %d. th. NE
Lithiumtetrachloroaluminat-
Elektrolyt: 6,85 % d. th. NE
Lithiumtetrachloroaluminat-Elektrolyt
Elektrolyt 1
Elektolyt 3
0% 1% 2% 3% 4% 5% 6% 7% 8% 9% 10% 11% 12% 13% 14% 15%
Kapazität [%d.Th.NE]

FIG. 11

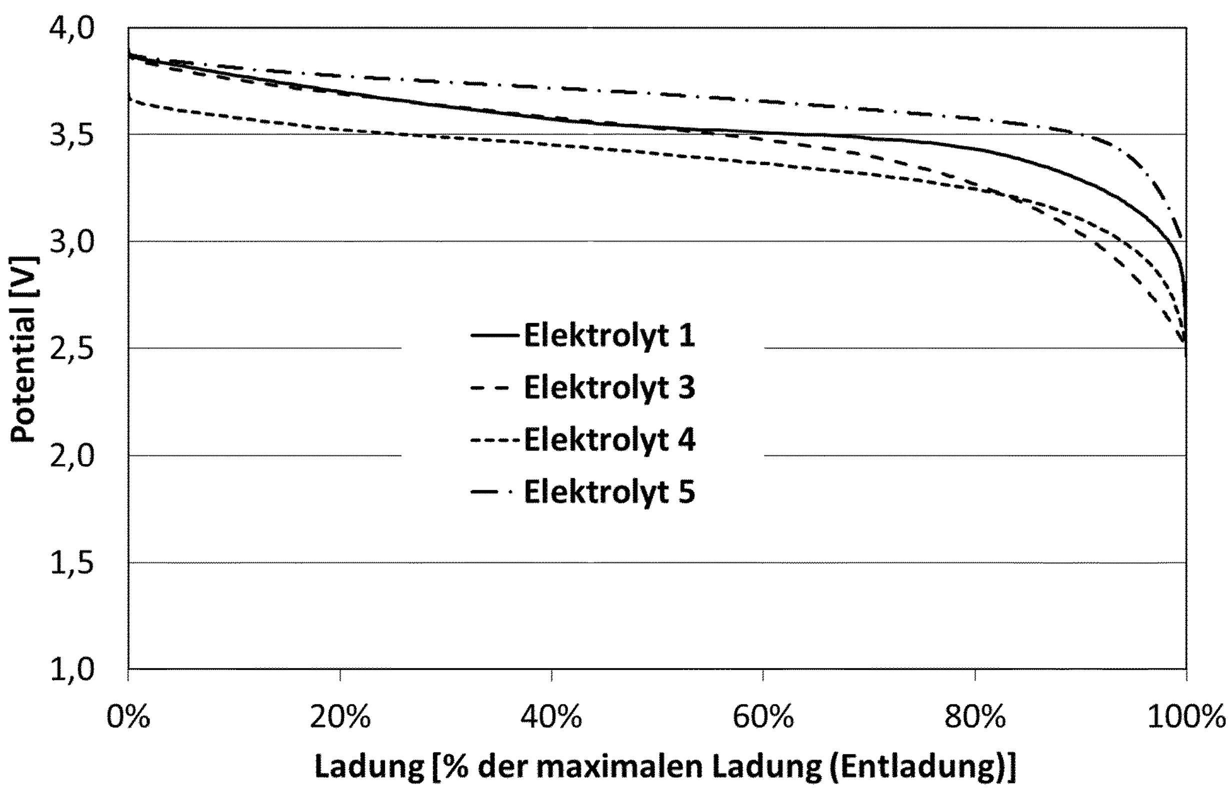
4,0
3,5
3,0
2,5
2,0
1,5
1,0
Potential [V]
Elektrolyt 1
Elektrolyt 3
Elektrolyt 4
Elektrolyt 5
0% 20% 40% 60% 80% 100%
Ladung [% der maximalen Ladung (Entladung)]

FIG. 12

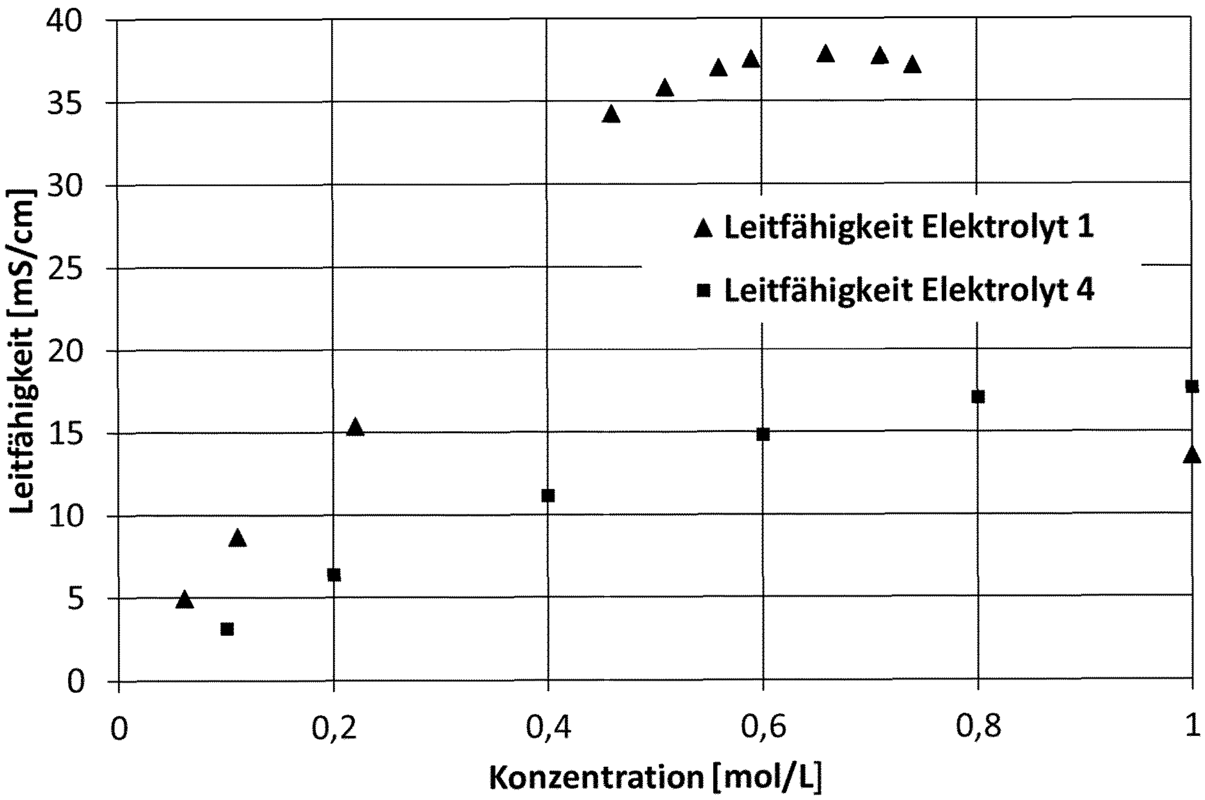
40
35
30
25
20
15
10
5
0
Leitfähigkeit [mS/cm]
▲ Leitfähigkeit Elektrolyt 1
■ Leitfähigkeit Elektrolyt 4
0
0,2
0,4
0,6
0,8
1
Konzentration [mol/L]

FIG. 13

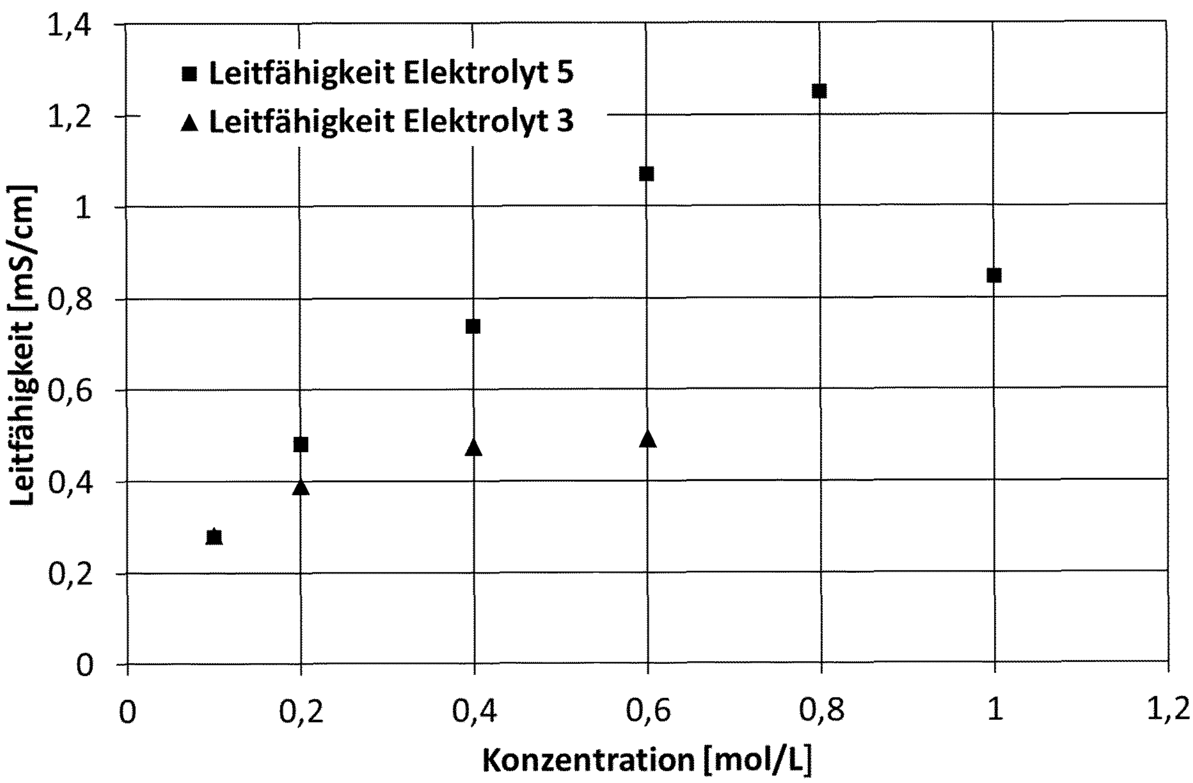
1,4
1,2
1
0,8
0,6
0,4
0,2
0
Leitfähigkeit [mS/cm]
■ Leitfähigkeit Elektrolyt 5
▲ Leitfähigkeit Elektrolyt 3
0
0,2
0,4
0,6
0,8
1
1,2
Konzentration [mol/L]

FIG. 14

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4306858 B
- JP 2001143750 A
- WO 2020013667 A1
- WO 2021006704 A1
- US 20150093632 A1
- WO 2020221564 A
- EP 2954588 B1


### In der Beschreibung aufgeführte Nicht-Patentliteratur


- **JUI-PIN YEN** ; **CHIA-CHIN CHANG** ; **YU-RUN LIN** ; **SEN-THANN SHEN** ; **JIN-LONG HONGA**. Effects of Styrene-Butadiene Rubber/Carboxymethylcellulose (SBR/CMC) and Polyvinylidene Difluoride (PVDF) Binders on Low Temperature Lithium Ion Batteries. *Journal of The Electrochemical Society*, 2013, vol. 160 (10), A1811-A1818
- **I. KROSSING**. *Chem. Eur. J.*, 2001, vol. 7, 490
- **S. M. IVANOVA et al.** *Chem. Eur. J.*, 2001, vol. 7, 503
- **TSUJIOKA et al.** *J. Electrochem. Soc.*, 2004, vol. 151, A1418